# EUROPÄISCHE PATENTANMELDUNG

(11) **EP 2 738 466 A2**
(43) Veröffentlichungstag der Anmeldung: **04.06.2014**
(21) Anmeldenummer: 13195016.4
(22) Anmeldetag: 29.11.2013
(51) Int. Cl.: F23G 7/06

(54) **Verfahren und Vorrichtung zur thermischen Nachverbrennung von Kohlenwasserstoffe enthaltenden Gasen**

(30) Priorität: 29.11.2012 DE 102012023257
(71) Anmelder: C-nox GmbH & Co. KG, 24537 Neumünster (DE)
(72) Erfinder: Kremer (jun.), Robert, 52080 Aachen (DE); Kremer (sen.), Robert, 51382 Leverkusen (DE); Wietfeld, Günther, 24539 Neumünster (DE)
(74) Vertreter: Hauck Patent- und Rechtsanwälte

(57) **Zusammenfassung**

Verfahren und Vorrichtung zur thermischen Nachverbrennung von Abgasen aus unvollkommenen Verbrennungs- oder Ofenprozessen, Schwelgasen, Deponiegasen, Schmauchgasen aus keramischen Ofenprozessen, Gasen aus Hausmüll- oder Biokompostieranlagen, Schwachgasen oder anderen Kohlenwasserstoffe enthaltenden Reduktionsgasen mittels Luft oder anderen Oxidationsgasen, bei dem das Reduktionsgas und das Oxidationsgas der Nachverbrennung in einer Brennkammer (2) separat zugeleitet und in der Brennkammer thermisch nachverbrannt werden und das Reduktionsgas bei der Zuleitung zur Brennkammer durch aus der Brennkammer weggeleitetes, thermisch nachverbranntes heißes Reingas rekuperativ erhitzt wird,
dadurch gekennzeichnet, dass
sowohl das Reduktionsgas als auch das Oxidationsgas auf dem Weg der separaten Zuleitung zur Brennkammer parallel strömend durch aus der Brennkammer weggeleitetes heißes Reingas rekuperativ erhitzt werden.

## Beschreibung

Die Erfindung bezieht sich auf ein Verfahren und auf eine Vorrichtung zur thermischen Nachverbrennung von Kohlenwasserstoffe enthaltenden Gasen unter rekuperativer Vorwärmung.

Bei den nachzuverbrennenden Gasen handelt es sich insbesondere um Biogase, Abgase, Schwelgase, Pyrolysegase, Abluft aus Lackieranlagen, Deponiegase, Schmauchgase aus keramischen Ofenprozessen (z.B. Entbinderung organischer Binder in keramischen Pressmassen), Gase aus Hausmüll- und Biokompostieranlagen, Schwachgase oder schwachkalorische Gase oder niedrigkalorische Gase (d.h. Gase mit geringem Anteil an brennbaren Kohlenwasserstoffen) oder andere im Grundsatz exotherm oxidierbare Mischgase mit unterschiedlichstem kalorischem Inhalt (Anteil an brennbarem Gas). Die nachzuverbrennenden Gase enthalten identische oder verschiedene Kohlenwasserstoffe als brennbares Gas. Vorzugsweise ist oder umfasst das brennbare Gas Methan.

Die nachzuverbrennenden Gase werden in dieser Anmeldung als "Reduktionsgase" oder "Rohgase" bezeichnet. Zur Nachverbrennung bzw. Oxidation der Reduktionsgase werden Luft, Sauerstoff oder andere Gase eingesetzt, die in dieser Anmeldung als "Oxidationsgase" oder "oxidierende Gase" bezeichnet werden. Vorzugsweise enthält das Reduktionsgas kein Oxidationsgas oder Oxidationsgas in so geringem Anteil, dass es ohne Zugabe von Oxidationsgas nicht brennbar ist.

Das Produkt der Nachverbrennung der Reduktionsgase mittels Oxidationsgasen wird in dieser Anmeldung als "Reingas" oder "Abgas" oder "Produktgas" bezeichnet. Verfahren und Vorrichtung zur Abluftreinigung mittels Oxidation von Gasen, welche unterschiedliche Mengen an Kohlenwasserstoff und ggfs. Kohlenmonoxid enthalten, sind grundsätzlich bekannt.

Fackelanlagen und Industriebrenner werden für die Verbrennung von Reduktionsgas mit oder ohne zusätzliche Anreicherung durch kohlenwasserstoffhaltige Gase wie z.B. Erdgas oder Propangas eingesetzt. Das Reduktionsgas wird vor der Verbrennung nicht vorgewärmt. Diese Vorrichtungen kommen insbesondere im Notfallbetrieb zum Einsatz. Dies ist beispielsweise der Fall, wenn in einer Biogasanlage der Verbrennungsmotor oder die Gasturbine oder Dampfturbine ausfällt bzw. gewartet werden muss. Dann muss fortlaufend erzeugtes Biogas abgefackelt werden, indem es mit eigenem kalorischen Inhalt oder mit zugesetztem Erd- oder Propangas oder anderem kohlenwasserstoffhaltigem Gas verbrannt wird, wenn der eigene kalorische Inhalt gering ist.

Ähnliche einfache Einrichtungen kommen auch als "thermische Nachbrenner" für Ofenabgase zum Einsatz, wenn z.B. Reste unverbrannter Kohlenwasserstoffe im Ofenabgas eines Ziegelofens, welche den Ofen schon bei erhöhter Temperatur verlassen, nachverbrannt werden sollen.

Diese einfachen Fackel- und Brenneranlagen zur thermischen Nachverbrennung stoßen bei niederkalorischen Reduktionsgasen immer dann an die Grenzen ihrer Anwendbarkeit, wenn die Kosten für den zusätzlichen Einsatz von Brenngasen zum Betrieb der Anlagen eine Vorwärmung des Reduktionsgases zwingend erfordern.

Systeme zur thermischen Nachverbrennung von niederkalorischen Gasen mit Vorwärmung der Reduktionsgase werden unterschieden in:
- thermisch oxidierende Anlagen mit regenerativer Vorwärmung des Rohgases (TNV-ThermischeNachVerbrennung) oder (RNV - Regenerative NachVer-brennung). Hierbei liegt die Brennraumtemperatur meist über 780°C;
- thermisch oxidierende Anlagen mit rekuperativer Vorwärmung des Rohgases (RTO - RekuperativeThermischeOxidation). Hierbei liegt die Brennraumtemperatur ebenfalls meist über 780°C;
- katalytische Nachverbrennung (KNV), bei der die notwendige Temperatur zur Oxidation des Rohgases katalytisch reduziert wird. Hier genügt eine Brennraumtemperatur von 300 bis 400°C, je nach Art und Inhalt des zu oxidierenden Rohgases, wobei die eigentliche Oxidation weniger durch Verbrennen als am Katalysator selbst bzw. im Katalysatorträger erfolgt.

In den beiden bekannten thermischen Verfahren der Nachverbrennung erfolgt eine Vorwärmung des Rohgases über den Energieinhalt des Reingases mittels Wärmetauscher, zum einen regenerativ mittels Wärmespeichern (TNV/RNV) und zum anderen rekuperativ mittels Wärmetauscher (RTO).

Beide thermischen Anlagen enthalten einen Brennraum, in dem bei geregelter Temperatur die eigentliche Nachverbrennung stattfindet. Die erforderliche Temperatur im Brennraum bei Start und Betrieb der Nachverbrennung wird üblicherweise durch Einsatz eines separaten Gasbrenners erreicht. Zur Minimierung der Leistung des Brenners wird das Reduktionsgas auf folgende Weise vorgewärmt:
Bei der regenerativen thermischen Nachverbrennung (TNV/RNV) basiert der Wärmeaustausch auf der abwechselnden Durchströmung von heißem Reingas aus der thermischen Nachverbrennung und kaltem Reduktionsgas durch keramische Wabenkörper oder Schüttungen. Das heiße Reingas gibt Wärme an die Wabenkörper oder Schüttungen ab, die vom Reduktionsgas aufgenommen wird. Der Vorteil der regenerativen thermischen Nachverbrennung liegt im hohen wärmetechnischen Wirkungsgrad hinsichtlich der Vorwärmung des Reduktionsgases. Bei einer Brennraumtemperatur um 800°C liegen die durch Vorwärmung erreichten Temperaturen des Reduktionsgases bei bis zu 780°C, was einem erzielbaren Wirkungsgrad der Reduktionsgasvorwärmung von 90 bis 98% entspricht. Eine Anwendung dieser Technik ist am Beispiel der Nachverbrennung von Gasen aus der Hausmüllkompostierung in der DE 101 49 807 B4 beschrieben.

Die Nachteile der regenerativen thermischen Nachverbrennung liegen zunächst in einem erheblichen apparativen Aufwand für die Umlenkung bzw. Umschaltung von Reduktionsgas und Reingas. Diese erfolgt meistens durch Heißklappensysteme. Alternativ erfolgt sie bei sogenannten "Drehverteilern" durch Rotation eines Verteilers, welcher unterhalb dem zylinderförmigen und in Kreissegmente aufgeteilten Wärmeaustauscher angeordnet ist. Ein Beispiel einer regenerativen thermischen Nachverbrennung mit Drehverteiler ist in der DE 199 50 891 C2 beschrieben.

Ein weiterer grundsätzlicher Nachteil der regenerativen thermischen Nachverbrennung liegt darin, dass die hohe Wärmekapazität der Wärmetauscherstrukturen in den einzelnen Kolonnen ein sehr träges Anfahrverhalten zur Folge hat. Infolgedessen werden diese Anlagen am besten kontinuierlich betrieben und sind bei diskontinuierlich arbeitenden Öfen und Anlagen nur schlecht einsetzbar.

Bei der rekuperativen thermischen Nachverbrennung (RTO) hingegen wird das Reduktionsgas über einen metallischen Rohrbündel-Wärmeaustauscher durch das heiße Reingas vorgewärmt und danach, wie auch bei der TNV üblich, in der Brennkammer bei Temperaturen über 750°C, im Allgemeinen unter Zugabe von Brennstoff und Verbrennungsluft über einen separaten Brenner verbrannt. Die verwendeten Brennertypen sind Flächen-, Düsen- oder Wirbelbrenner. Sie erhitzen mittels Zusatzbrennstoffen und Verbrennungsluft das nachzuverbrennende Reduktionsgas auf Reaktionstemperatur, wobei der vorgeheizte Reduktionsgasstrom in den Brenner bzw. eine Flamme geleitet wird. Bei der regenerativen Vorwärmung des Reduktionsgases wird bedingt durch den Einsatz metallischer Rohrbündel-Wärmetauscher eine Vorwärmtemperatur des Rohgases von unter 500°C erreicht. Der energetische Wirkungsgrad (bezogen auf die mögliche Vorerwärmung des Reingases allein) beträgt infolgedessen maximal 70%, sodass bei den bekannten rekuperativen thermischen Nachverbrennungen der zusätzliche Aufwand an Primärenergie höher ist als bei regenerativen Anlagen.

Katalytische Nachverbrennungen (KNV) zielen auf einen Oxidationsprozess bei niedrigeren Temperaturen, wobei das Reduktionsgas auch rekuperativ oder regenerativ vorgewärmt werden kann. Die Oxidation findet mittels Katalysatoren (vorzugsweise mit Platin beschichtete Hohlkörperstrukturen, z.B. Wabenkörper oder Schüttungen) typischerweise bei Temperaturen zwischen 300°C und 400°C statt. Die katalytische Nachverbrennung stößt allerdings schnell an ihre Grenzen, sowohl hinsichtlich der Kapazität der Anlagen, als auch hinsichtlich der Art und Menge der Schadstoffbeladungen im Reduktionsgas. Große Mengenströme an nachzuverbrennendem Reduktionsgas werden nämlich fast nie katalytisch nachverbrannt. Zudem können Katalysatorengifte, wie z.B. Halogene, Schwermetalle, Silikone, Schwefel, die Funktion des Katalysators beeinträchtigen sowie bei Kondensationen bestimmter Inhaltsstoffe wie z.B. Wachsen im Katalysatorträger die feinen Kanäle verstopfen bzw. versotten. Die katalytische Nachverbrennung hat heute bei Weitem keine so große Verbreitung erreicht, wie die beiden thermischen Nachverbrennungsarten mit Reduktionsgasvorwärmung. Sie wird aber hier nicht nur der Vollständigkeit halber erwähnt, sondern auch im Hinblick darauf, dass die Verwendung katalytisch wirkender Werkstoffe und Werkstoffstrukturen bei der vorgestellten Erfindung grundsätzlich möglich ist, somit also die notwendige Temperatur im Brennraum auch durchaus katalytisch gesenkt werden kann.

Beispiele für alle genannten Arten der Nachverbrennung finden sich in den Prospekten der KBA Metal Print GmbH (www.kba-metalprint.com). Diese beschreiben einerseits typische regenerative thermische Nachverbrennungen (bezeichnet als "thermisch-regenerative Anlagen, TRA") bekannter Bauart, bei denen bauartbedingt nur das nachzuverbrennende Reduktionsgas mit dem thermisch nachverbrannten Reingas die Wärme regenerativ tauschen kann. Auch hierbei wird die notwendige Verbrennungsluft über einen in den Brennraum mündenden Brenner zugeführt.

Weiterhin beschreiben die Prospekte der KBA Metal Print GmbH eine rekuperativ arbeitende, horizontal angeordnete Anlage zur thermischen Nachverbrennung mit der Bezeichnung "TNV - thermal recuperative air purification". Hierbei wird das zu verbrennende Reduktionsgas zunächst um die Rohre eines Wärmetauschers mittels Leitflächen geleitet, dann in einem koaxialen Doppelmantel um den Brennraum herum einem Brenner zugeführt. Dort wird das Reduktionsgas von der Strömung eines Flächenbrenners angesaugt und verbrannt. Das hierbei entstehende Reingas verlässt den Brennraum durch die Rohre des Wärmetauschers und überträgt die Wärme an das an den Rohren vorbeigeleitete Reduktionsgas. Auch hier muss der Flächenbrenner mit Erdgas oder Propangas sowie Verbrennungsluft betrieben werden und wird die Verbrennungsluft über den Brenner zugeführt.

Weitere Nachteile der rekuperativen Anlage sind durch die horizontale Aufstellung der Anlage und des Rohrbündelwärmetauschers begründet. Diese führt nämlich mittelfristig leicht zu Ablagerungen in den horizontalen Rohren des Wärmeaustauschers mit einhergehenden Wirkungsgradeinbußen bis zu einer Verstopfung der horizontalen Rohre des Wärmetauschers. Aufgrund der Thermik innerhalb des Rohrbündelwärmetauschers müssen sich deutlich unterschiedliche Temperaturen im unteren und im oberen Bereich einstellen (unten kälter, oben wärmer). Die thermomechanische Belastung der horizontalen Rohre kann mittelfristig zu einer Verformung der Rohre führen.

Weiterhin ist die Ausführung des Rohrbündelwärmetauschers mit beidseitig angeordneten Rohrplatten nachteilig. Die dem Brennraum bzw. der Brennerflamme zugewandte Rohrplatte ist nämlich extremer thermischer und korrosiver Belastung ausgesetzt. Aufgrund der thermischen Dehnung der Rohre im Rohrbündel und der deutlich unterschiedlichen Temperaturen im unteren und oberen Bereich des horizontalen Rohrbündels müssen erhebliche mechanische Spannungen an den Schweißstellen auftreten. Diese können mittelfristig zu Undichtigkeiten zwischen Rohrenden und Rohrplatte führen, sodass unverbranntes Reingas im Kurzschluss direkt durch die Rohrplatte in die Rohrenden strömen kann und so das Reingas verunreinigen kann.

Davon ausgehend liegt der Erfindung die Aufgabe zugrunde, ein Verfahren und eine Vorrichtung zur thermischen Nachverbrennung von Kohlenwasserstoffe enthaltenden Reduktionsgasen zu schaffen, das bzw. die einfacher realisierbar ist und einen verbesserten thermischen Wirkungsgrad aufweist.

Die Aufgabe wird durch ein Verfahren mit den Merkmalen von Anspruch 1 gelöst.

Bei dem erfindungsgemäßen Verfahren zur thermischen Nachverbrennung von Abgasen aus unvollkommenen Verbrennungs- oder Ofenprozessen, Schwelgasen, Deponiegasen, Schmauchgasen aus keramischen Ofenprozessen, Gasen aus Hausmüll- oder Biokompostieranlagen, Schwachgasen oder anderen Kohlenwasserstoffe enthaltenden Reduktionsgasen mittels Luft oder anderen Oxidationsgasen werden das Reduktionsgas und das Oxidationsgas der Nachverbrennung in einer Brennkammer separat zugeleitet und in der Brennkammer thermisch nachverbrannt und wird das Reduktionsgas bei der Zuleitung zur Brennkammer durch aus der Brennkammer weggeleitetes, thermisch nachverbranntes heißes Reingas rekuperativ erhitzt, dadurch gekennzeichnet, dass sowohl das Reduktionsgas als auch das Oxidationsgas auf dem Weg der separaten Zuleitung zur Brennkammer durch aus der Brennkammer weggeleitetes heißes Reingas rekuperativ erhitzt werden.

Vorteilhafte Ausgestaltungen des Verfahrens sind in Unteransprüchen 2 bis 7 angegeben.

Ferner wird die Aufgabe durch eine Vorrichtung mit den Merkmalen von Anspruch 8 gelöst.

Die erfindungsgemäße Vorrichtung zur thermischen Nachverbrennung von Abgasen aus unvollkommenen Verbrennungs- oder Ofenprozessen, Schwelgasen, Deponiegasen, Schmauchgasen aus keramischen Ofenprozessen, Gasen aus Hausmüll- oder Biokompostieranlagen, Schwachgasen oder anderen Kohlenwasserstoffe enthaltenden Reduktionsgasen mittels Luft oder anderen Oxidationsgasen hat eine Brennkammer, die separate Einlässe für Reduktionsgas und Oxidationsgas und einen Auslass für thermisch nachverbranntes heißes Reingas aufweist, und mindestens einen rekuperativen Wärmetauscher mit mindestens einem primärseitigen Strömungskanal, dessen Einlass mit dem Auslass für heißes Reingas der Brennkammer verbunden ist, und mindestens einem sekundärseitigen Strömungskanal, der einen Einlass für das Reduktionsgas und einen Auslass hat, der mit dem Einlass der Brennkammer für Reduktionsgas verbunden ist, dadurch gekennzeichnet, dass der rekuperative Wärmetauscher sowohl mindestens einen sekundärseitigen Strömungskanal für das Reduktionsgas als auch mindestens einen sekundärseitigen Strömungskanal für das Oxidationsgas aufweist, der einen Einlass für das Oxidationsgas und einen Auslass aufweist, der mit dem Einlass für das Oxidationsgas der Brennkammer verbunden ist.

Vorteilhafte Ausgestaltungen der Vorrichtung sind in Unteransprüchen 9 bis 15 angegeben.

Die Aufgabe wird bei dem erfindungsgemäßen Verfahren und der erfindungsgemäßen Vorrichtung dadurch gelöst, dass im Unterschied zu den heute üblicherweise eingesetzten regenerativen oder rekuperativen thermischen Nachverbrennungsanlagen, hier eine rekuperative thermische Nachverbrennung von Kohlenwasserstoffe enthaltenden Reduktionsgasen durchgeführt wird, deren besonderes Merkmal die Vorwärmung sowohl des Reduktionsgases als auch des Oxidationsgases durch das Reingas aus der Nachverbrennung ist.

Die Vorerwärmung des Reduktionsgases und des Oxidationsgases wird vorzugsweise in mindestens einem Wärmetauscher durchgeführt. Der Wärmetauscher hat mindestens einen primärseitigen Strömungskanal, durch den heißes Reingas hindurchgeführt wird. Das Reingas tritt durch einen Einlass in den primärseitigen Strömungskanal ein und durch einen Auslass aus dem primärseitigen Strömungskanal aus. Ferner hat der Wärmetauscher mindestens einen sekundärseitigen Strömungskanal für Reduktionsgas. Der sekundärseitige Strömungskanal für Reduktionsgas ist durch eine wärmeleitende Wand vom primärseitigen Strömungskanal getrennt. Das Reduktionsgas tritt durch einen Einlass in den sekundärseitigen Strömungskanal ein und verlässt ihn durch einen Auslass. Auf dem Weg durch den sekundärseitigen Strömungskanal nimmt es durch die wärmeleitende Wand hindurch Wärme vom Reingas auf. Ferner hat der mindestens eine Wärmetauscher mindestens einen sekundärseitigen Strömungskanal für Oxidationsgas. Der sekundärseitige Strömungskanal für Oxidationsgas ist durch eine wärmeleitende Wand vom primärseitigen Strömungskanal getrennt. Das Oxidationsgas tritt durch einen Einlass in den sekundärseitigen Strömungskanal ein und verlässt ihn durch einen Auslass. Auf dem Weg durch den sekundärseitigen Strömungskanal nimmt es durch die wärmeleitende Wand hindurch Wärme vom Reingas auf. Vorzugsweise wird die Vorwärmung von Reduktionsgas und Oxidationsgas in einem gemeinsamen Wärmetauscher durchgeführt, der mindestens einen primärseitigen Strömungskanal für Reingas und sowohl mindestens einen sekundärseitigen Strömungskanal für Reduktionsgas als auch mindestens einen sekundärseitigen Strömungskanal für Oxidationsgas aufweist. Alternativ wird die Vorwärmung von Reduktionsgas und Oxidationsgas in voneinander getrennten Wärmetauschern durchgeführt, von denen einer mindestens einen primärseitigen Strömungskanal für einen Teil des Reingases und mindestens einen sekundärseitigen Strömungskanal für das Reduktionsgas und ein anderer mindestens einen primärseitigen Strömungskanal für einen weiteren Teil des Reingases und mindestens einen sekundärseitigen Strömungskanal für das Oxidationsgas aufweist.

Die Brennkammer umfasst einen Brennraum, der durch eine oder mehrere Wände von der Umgebung abgetrennt ist und in dem die Nachverbrennung durchgeführt wird. Bevorzugt ist der Brennraum allseits durch eine oder mehrere Wände von der Umgebung abgetrennt. Lediglich am Auslass für das Reingas sowie den Einlässen für das Reduktionsgas und das Oxidationsgas ist die Brennkammer geöffnet. Ggfs. ist durch mindestens eine Wand der Brennkammer hindurch ein Gasbrenner oder eine andere Feuerungseinrichtung und/oder ein Temperatursensor und/oder mindestens ein anderer Sensor in den Brennraum hineingeführt. Der Brennraum wird in dieser Anmeldung auch als "Feuerraum" bezeichnet.

Der entscheidende Vorteil der Erfindung liegt also darin, dass nicht nur das Rohgas auf Temperaturen wenig unterhalb der notwendigen Oxidationstemperatur im Brennraum vom Reingas aufgeheizt wird, sondern auch das zur Oxidation notwendige oxidierende Gas (üblicher Weise die Verbrennungsluft) in gleicher Weise auf ähnlich hohe Temperatur im Wärmetauscher aufgeheizt wird, wodurch der Wirkungsgrad dieses rekuperativen Wärmetauschers deutlich höher ist als bei den heute bekannten rekuperativen Systemen.

Geht man zum Beispiel von einem Rohgas mit ca. 10% Methan und 90% Stickstoff aus, so ist die zur vollständigen Oxidation erforderliche Verbrennungsluftmenge etwa gleich der Menge an Rohgas. Während nun bekannte Systeme der thermischen Nachverbrennung nur das Rohgas auf Temperaturen bestenfalls kurz unterhalb der Brennraumtemperatur aufheizen können, die Verbrennungsluft aber separat "von außen" über einen Brenner dem Brennraum zugeführt werden muss, ist das neu vorgestellte Konzept in der Lage, beide etwa gleich großen Stoffströme rekuperativ auf Temperaturen kurz unterhalb der Brennraumtemperatur vorzuheizen.

Für hochkalorische Rohgase mit noch deutlich höheren Anteilen an Methan oder anderen Kohlenwasserstoffen gilt der genannte Vorteil der System intrinsischen Luftvorwärmung in noch stärkerem Maße, da hier die Mengen der zur Oxidation notwendigen Luft noch weitaus höher sind: Im Extremfall der Verbrennung reinen Erdgases wird etwa die zehnfache Luftmenge zur vollständigen Oxidation benötigt. Selbst wenn in regenerativen oder rekuperativen Anlagen heutiger Bauart eine Vorwärmung der Verbrennungsluft außerhalb des eigentlichen Reaktors vorgesehen wäre, so könnte dieser externe Luft/Abluft Wärmetauscher die Verbrennungsluft nur auf max. 400°C aufheizen, da einerseits heutige Brennersysteme eine heißere Verbrennungsluft kaum werkstofflich verkraften, insbesondere aber gar kein Abgasstrom mit einer entsprechend hohen Temperatur zum Wärmetausch zur Verfügung steht.

Gemäß einer bevorzugten Ausgestaltung der Erfindung werden in dem Wärmetauscher die beiden Eduktgase der Oxidationsreaktion durch getrennte Rohre in einen Brennraum geleitet und vom entgegenströmenden Reingas um die Rohre aufgeheizt. In dieser Anmeldung sind mit dem Begriff "Rohr" langgestreckte Hohlkörper mit kreisförmiger, elliptischer oder polygonaler (d.h. mehreckiger) Kontur am Außenumfang und/oder am Innenumfang bezeichnet. Vorzugsweise haben die Rohre einen kreisförmigen Außenumfang und einen kreisförmigen Innenumfang. Gemäß einer Ausgestaltung sind die Rohre am Außenumfang und/oder am Innenumfang mit längsgerichteten Rippen versehen.

Durch die Verwendung eines zum Reaktionsraum hin offenen neuartigen Wärmeaustauschers, aufgebaut aus feuerfesten Rohren, werden auf einfachste Weise sowohl das Reduktionsgas als auch das notwendige Oxidationsgas, zum Beispiel Luft, der Nachverbrennung in einen Reaktionsraum separat zugeführt und dort verbrannt. Dann wird der heiße Reingasstrom im Brennraum umgelenkt und um die Rohre im Gegenstrom zurückgeführt, wodurch der rekuperative Wärmetausch vom heißen Reingas auf beide kühleren Eduktgase realisiert wird.

Die einfache Konstruktion mit zum Brennraum hin offen endenden Rohren des Wärmetauschers umgeht insbesondere die grundsätzlich bei Geradrohr-Bündelwärmetauschern große Problematik der unterschiedlichen Wärmedehnung einzelner Rohre bei gleichzeitiger Fassung in zwei Rohrplatten, je einer an der Anström- und einer an der Abströmseite:
Da die Rohre in einer vorteilhaften Ausgestaltung der Erfindung nur einseitig auf der kalten Anströmseite an einer Lochplatte (auch "Rohgasverteilerplatte" bzw. "Luftverteilerplatte" genannt) gehalten, befestigt oder angeschweißt sind, können sie sich in der Länge beliebig in den Feuerraum ausdehnen oder beim Abkühlen zusammenziehen, ohne hierbei untereinander Zug- oder Druckspannungen zu übertragen.

Diese Bauart des Wärmetauschers ermöglicht eine hohe Wärmedehnung und damit einen Betrieb bei hohen Temperaturen ohne Beschädigung der Struktur. Hierdurch wird ein hoher Wirkungsgrad des rekuperativen Wärmetauschers begünstigt.

Gemäß einer bevorzugten Ausgestaltung bestehen zumindest die in der Brennkammer mündende Abschnitte der Rohre des Wärmetauschers aus hochtemperaturfestem Material. Das hochtemperaturfeste Material ist vorzugsweise so beschaffen, dass es Temperaturen von mindestens 780°C standhält. Als hochtemperaturfestes Material kommt gemäß einer bevorzugten Ausgestaltung gasdichtes siliziuminfiltriertes Siliziumcarbid (SiC) zum Einsatz. Gemäß einer bevorzugten Ausgestaltung bestehen nur Abschnitte der Rohre aus dem hochtemperaturfesten Material. Die Erfindung bezieht aber auch Ausgestaltungen ein, bei denen die Rohre insgesamt aus dem hochtemperaturfesten Material bestehen.

Diese Ausgestaltung des Wärmetauschers ermöglicht einen Betrieb bei hohen Temperaturen ohne Beschädigung der Struktur. Auch dies begünstigt einen hohen Wirkungsgrad des rekuperativen Wärmetauschers.

Insgesamt wird durch die Kombination der Vorerwärmung von Reduktionsgas und Oxidationsgas in einem Wärmetauscher mit in Längsrichtung frei dehnbar angeordneten Rohren und die Ausführung der Rohre aus hochtemperaturfestem Material ein besonders hoher Wirkungsgrad der rekuperativen thermischen Nachverbrennung ermöglicht.

Die Brennkammer und der Wärmetauscher sind gemäß einer weiteren Ausgestaltung baulich zu einer Einheit zusammengefasst, die in dieser Anmeldung auch als "Reaktor" bezeichnet wird.

Zum Starten der erfindungsgemäßen rekuperativen Nachverbrennung ist gemäß einer weiteren Ausgestaltung für die Aufheizung des Brennraums auf eine Temperatur oberhalb der Zündtemperatur der Eduktgasmischung eine elektrische Widerstandsheizung oder eine andere Heizeinrichtung und/oder ein Gasbrenner oder eine andere Feuerungseinrichtung vorgesehen.

Gemäß einer weiteren Ausgestaltung wird beim Startvorgang von den beiden Eduktgasen zunächst das oxidierende Gas, also im Normalfall die Verbrennungsluft in den vorgeheizten Verbrennungsraum geleitet, dieser zur Vermeidung von Verpuffungen kurz gespült und erst anschließend das nachzuverbrennende Reduktionsgas langsam mit zunehmendem Volumenstrom zugeschaltet, bis das bei der Verbrennung entstehende heiße Reingas die Eduktgase im Gegenstrom so weit vorwärmt, dass die exotherme Verbrennung der Reduktionsgase im Verbrennungsraum genügt um die erforderliche Prozesstemperatur im Feuerraum stabil zu erhalten.

Zum Zweck der Druck- und Temperaturregelung des Reaktors als auch zur Energieauskopplung auf hohem Temperaturniveau wird gemäß einer weiteren Ausgestaltung ein Teil des Reingasstromes bei Feuerraumtemperatur direkt aus dem Feuerraum geregelt abgezweigt, so dass die im Feuerraum entstehende exotherme Reaktion nur teilweise zur Vorwärmung der Eduktgase im Gegenstrom, teilweise aber auch direkt in nachgeschalteten Energiewandlern genutzt werden kann. Hierfür ist gemäß einer weiteren Ausgestaltung ein Ventil mit dem Feuerraum verbunden. Dieses ist z.B. eine im Querschnitt regelbare, feuerfeste Klappe bzw. eine im Öffnungsquerschnitt regelbare Öffnung in einer Wand der Brennkammer des Reaktors vorgesehen.

Im Falle extrem niedriger Anteile von brennbaren Kohlenwasserstoffen im zu oxidierenden Reduktionsgas, bei dem die exotherme Verbrennungsreaktion trotz der rekuperativen Vorwärmung der Eduktgase nicht ausreicht, um die für den Prozess notwendige Temperatur im Feuerraum sicher zu erreichen und zu halten, ist gemäß einer weiteren Ausgestaltung vorgesehen, das Reduktionsgas vor dem Eintritt in die Wärmetauscherrohre des Reaktors mit einem Brenngas wie Erdgas oder Propan in geringen Mengen anzureichern, um den Prozess bei genügend hoher Temperatur stabil ablaufen zu lassen. Alternativ besteht natürlich auch die Möglichkeit, den Feuerraum direkt mittels einer elektrischen Widerstandsheizung oder anderer Heizeinrichtung und / oder einem separaten Gasbrenner oder anderer Feuerungseinrichtung auch über die Startphase hinaus zu beheizen und auf die notwendige Prozesstemperatur dauerhaft zu regeln.

Für die Verhältnisregelung zwischen Reduktions- und Oxidationsgas ist gemäß einer weiteren Ausgestaltung als Regelgröße eine Lambdamessung vorgesehen, welche die Sauerstoffkonzentration im Reingas ermittelt und auf Sauerstoffgehalte größer 0,5 Vol. % Sauerstoff im Abgas (Reingas) regelt.

Um den Wärmeübergang vom Reingas (Produktgas) auf die Rohre, durch welche die Eduktgase separat geführt und aufgeheizt werden sollen, zu erhöhen, ist gemäß einer weiteren Ausgestaltung die mehrfache Umlenkung des Reingasstromes durch feuerfeste Schikanen vorgesehen, so dass der Reingasstrom um die Rohre zumindest teilweise von einem Parallelstrom entlang der Rohre in einen Kreutzstrom quer bzw. schräg zu den Rohren umgeleitet wird. Gemäß einer weiteren Ausgestaltung sind die Schikanen Rohrplatten und sind die Rohre durch die Löcher der Rohrplatten hindurch erstreckt und seitlich abgestützt.

In den Fällen, in denen der kalorische Inhalt des Rohgases eine Wärmeauskopplung aus der thermischen Nachverbrennung erlaubt, ist gemäß einer weiteren Ausgestaltung vorgesehen, das Reingas auf hohem Temperaturniveau aus dem Brennraum direkt abzuzweigen und zur Energiewandlung in nachgeschalteten Gas- oder Dampfturbinen, Stirlingmotoren, Dampfmaschinen oder anderen Wärmekraftmaschinen zu nutzen.

Um die thermische Oxidation des jeweils nachzuverbrennenden Rohgases zu optimieren, ist gemäß einer weiteren Ausgestaltung das Volumen des Feuerraums dem jeweils zu verbrennenden Volumenstrom der Eduktgase anzupassen um so die jeweils erforderliche Verweilzeit für die thermische Oxidation einzuhalten.

Darüber hinaus ist gemäß einer weiteren Ausgestaltung vorgesehen, das den Brennraum verlassende Reingas vor dem Eintritt in den Wärmetauscher zunächst durch eine offen poröse keramische Schicht zu leiten, welche einerseits die unmittelbare Wärmestrahlung vom Brennraum in den Bereich der Wärmetauschers minimiert, andererseits auch für eine Optimierung der im Feuerraum stattgefundenen Verbrennung sorgt, indem in seiner Porenstruktur bewusst starke Verwirbelung bei gleichzeitig hoher Temperatur die Oxidation des Reduktionsgases final abschließt. Auch besteht hier die Möglichkeit, diese offen poröse keramische Schicht katalytisch zu beschichten, so denn eine Herabsetzung der Oxidationstemperatur angestrebt wird. Weitere Merkmale und Vorteile der neu vorgestellten rekuperativ arbeitenden Vorrichtung zur thermischen Nachverbrennung sind:
Die einfache Regelbarkeit der Vorrichtung, da hier keine (heißen) Gasströme ständig richtungswechselnd umgeleitet werden müssen wie bei regenerativ arbeitenden Anlagen

Das im Unterschied zu den bekannten TNV nicht nur das thermisch zu reinigende Rohgas vom abströmenden Reingas aufgeheizt wird, sondern auch ein auf das jeweils zu verbrennende Rohgas angepasster Volumenstrom der für die Oxidation notwendigen Verbrennungsluft aufgeheizt werden kann, so dass ein Maximum der überhaupt erreichbaren Eduktgasvorwärmung mit einfachsten Mitteln realisiert wird. Zu diesem Zweck sollte natürlich die Anzahl der Wärmetauscher Rohre bzw. die Summe der jeweils offenen Strömungsquerschnitte einerseits für die Verbrennungsluft sowie andererseits für das Rohgas entsprechend den zu erwartenden Volumenströmen für eine vollständige Verbrennung aufgeteilt sein.

Die erfindungsgemäße Vorrichtung zur thermischen Nachverbrennung weist gemäß einer bevorzugten Ausgestaltung folgende Merkmale auf:
- einen thermisch isolierten Reaktor,
- einen Wärmetauscher aus geraden Rohren,
- welche von je einem Verteilerraum für das Reduktionsgas
- und für das Oxidationsgas
- durch jeweilige Lochplatten geführt und gehalten werden
- so dass das zu verbrennende Reduktionsgas und das oxidierende Gas getrennt durch die parallel angeordneten Rohre zu einem Brennraum geführt werden, in den die Rohre mit ihrem offenen Ende münden. Aus dem Brennraum wird das dann thermisch nachverbrannte Reingas teilweise zur rekuperativen Vorwärmung der Eduktgase im Kreuz- und/oder Gegenstrom um die Rohre des Rohrbündels zu einem Abzug geleitet, der andere Teil wird direkt aus einer Öffnung im Brennraum abgeleitet.

Gemäß einer weiteren Ausgestaltung ist zur Regelung des Mengenstroms des aus dem Brennraum entnommenen heißen Reingases ein zweiter Auslass für heißes Reingas der Brennkammer mit einem Ventil zum Einstellen des aus dem zweiten Auslass abströmendem Mengenstromes des Reingases vorhanden. Gemäß einer weiteren Ausgestaltung weist das Ventil einen feuerfesten Verschlussstopfen auf, der in einer Öffnung einer Wand der Brennkammer in Richtung senkrecht zur Öffnung verlagerbar angeordnet ist, um den freien Öffnungsquerschnitt der Öffnung und hierüber den Mengenstrom des daraus abströmenden Reingases einzustellen. Alternativ ist der zweite Auslass zur Regelung des Mengenstroms des entnommenen Reingases mit einem einstellbaren Klappenventil verbunden. Das Reingas kann durch ein mit dem Ventil verbundenes Rohrsystem zu einem Energiewandler geleitet werden.

In der bevorzugten Ausführung ist es vorgesehen, den Reaktor sowie die Rohre vertikal (senkrecht stehend) anzuordnen, so dass die Strömung der kalten Eduktgase von unten nach oben durch die Rohre, die Abströmung des heißen, verbrannten Reingases hingegen im Gegenstrom um die Rohre von oben nach unten erfolgt, wobei die Reingase vorteilhaft durch temperaturfeste Schikanen auch zur Queranströmung der Rohre umgelenkt werden. Durch diese vertikale Anordnung wird der Druckverlust im Wärmetauscher auf natürliche Weise reduziert, da die aufzuheizenden Eduktgase der natürlichen Konvektion folgend nach oben strömen, während das abkühlende Reingas nach unten strömt.

Weiterhin ist vorgesehen, dass die im unteren, kalten Ende des Wärmetauschers angeordneten Abschnitte der Rohre des Rohrbündels aus Edelstahlrohren gefertigt sind, welche problemlos in eine Lochplatte des Verteilerraumes für das Reduktionsgas und in eine Lochplatte des Verteilerraumes für das oxidierende Gas gasdicht eingeschweißt oder darin verschraubt werden können.

Als optimalen Werkstoff für die oberen Abschnitte der offen in den Feuerraum mündenden Rohre wird gasdichtes Silicium infiltriertes Siliciumcarbid (SiSiC) vorgeschlagen, welches problemlos Temperaturen bis 1360°C widerstehen kann und welche sich frei in der Länge ausdehnen können, da die Rohrenden mechanisch nicht in Ihrer Höhe fixiert sind womit Spannungen durch Wärmedehnung und unterschiedliche Temperaturen am und im Rohr weitestgehend minimiert sind.

Als Fügestelle zwischen den Edelstahlrohren, angeordnet im kälteren Bereich des Wärmetauschers und den SiC-Rohren, welche zum Feuerraum führen, wird gemäß einer weiteren Ausgestaltung vorgeschlagen, dass das SiC-Rohr koaxial ca. 250mm weit über das Edelstahlrohr gesteckt wird, auf einem Kragen am Edelstahlrohr aufsitzt und wiederum von einem am Kragen angeschweißten Edelstahlrohr mit ca. 250 Höhe mm umhüllt wird. Das SiC-Rohr steht somit innerhalb zweiter koaxialer Edelstahlrohre auf dem Kragen auf und kann sich in der Länge bei Temperaturänderung beliebig frei ausdehnen.

Diese koaxiale Fügestelle zwischen den Edelstahlrohren und den SiC-Rohren wird gemäß einer weiteren Ausgestaltung im doppelten Ringspalt mit einem keramischen Kleber auf SiC-Basis oder Aluminiumoxid-Basis dergestalt aufgefüllt, dass eine ausreichende Gasdichtigkeit zum umströmenden Reingas gegeben ist.

Zur Optimierung des Wärmeübergangs vom Reingas auf die Wärmetauscherrohre werden gemäß einer weiteren Ausgestaltung Schikanen in Form von feuerfesten Lochplatten zum Beispiel aus Cordierit so angeordnet, dass sie den Gasstrom des Reingases mehrfach umlenken. Diese feuerfesten Schikanen haben weiterhin den Zweck, die Wärmetauscherrohre in ihrer jeweiligen Position zu halten, sie dienen also auch einer mechanischen Stabilisierung der Rohre des Rohrbündels gegeneinander. Somit sollten die Schikanen also Lochausschnitte aufweisen, die die SiC Rohre mit nur geringem Spiel umfassen, und somit horizontal die Rohre untereinander auf Abstand halten und die Schikanen selbst durch Überlappung in verschiedenen Höhen in der Horizontalen fest positioniert werden. Die Schikanen können in ihrer Höhe zum Beispiel fixiert werden, indem sie horizontal auf mindestens zwei dünne Keramikrohre gelegt werden, welche selbst in der Isolation des Reaktors fixiert sind.

Um unmittelbare Wärmeabstrahlung vom Brennraum in den Bereich um die Wärmetauscherrohre zu minimieren, wird gemäß einer weiteren Ausgestaltung eine offen poröse Keramikstruktur, z.B. aus hochporösen Calzium-Hexa-Aluminat Granulaten vorgesehen. Diese offen poröse keramische Schicht begrenzt den unteren Teil des Brennraums, in den die offenen Enden der Rohre eintreten, und sorgt auch für eine Optimierung der im Feuerraum stattgefundenen Verbrennung, indem in seiner Porenstruktur bewusst starke Verwirbelung bei gleichzeitig hoher Temperatur die Oxidation des Reduktionsgases final abschließt, bevor das Reingas um die Wärmetauscherrohre im Gegenstrom bzw. mittels Schikanen im Kreuzgegenstrom zu den Eduktgasen geleitet wird.

Der Reaktor weist gemäß einer weiteren Ausgestaltung eine metallische Hülle auf, die zum Feuerraum sowie zu den Wärmetauscherrohren auf die jeweils anstehenden Temperaturen hin angepasst thermisch isoliert ist, so dass die entstehende Wärme weitestgehend im Reaktor verbleibt. Diese Isolation kann sowohl aus Faserwerkstoffen (Glas- Keramikwolle bzw. Faser) oder alternativ auf Feuerleichtsteinen oder Feuerleichbeton (z.B. ein Calcium-Hexa-Aluminat Leichtbeton) aufgebaut sein.

Gemäß einer weiteren Ausgestaltung ist die am unteren Ende des Wärmetauschers angeordnete Lochplatte, auf die die Reingase im Reaktor vor Ihrem Austritt zuströmen, mit einer effektiven thermischen Isolation versehen, so dass die Rohrplatte sowie die Einschweißstellen der Rohre vor thermischer Belastung und chemisch korrosivem Eingriff effektiv geschützt wird.

Gemäß einer weiteren Ausgestaltung des Reaktors wird das nachzuverbrennende Schwachgas und / oder die Verbrennungsluft zusätzlich vorgewärmt, indem sie zunächst innerhalb eines bzw. zweier separater Doppelmantel um den isolierten Reaktor herum zu den jeweiligen Lochplatten mit Rohrübergang geleitet werden, und somit einerseits der Reaktormantel aktiv gekühlt wird, andererseits auf diese Weise sowohl der Wirkungsgrad optimiert als auch ein einfacher Berührungsschutz vor dem heißen inneren Reaktormantel realisiert wird.

Weitere Ausgestaltungen der Erfindung sind nachstehend beschrieben:
1. Verfahren zur thermischen Nachverbrennung von Abgasen aus unvollkommenen Verbrennungs- oder Ofenprozessen, Schwelgasen, Deponiegasen, Schmauchgasen aus keramischen Ofenprozessen, Gasen aus Hausmüll- oder Biokompostieranlagen, Schwachgasen oder anderen Kohlenwasserstoffe enthaltenden Reduktionsgasen mittels Luft oder anderen Oxidationsgasen, bei dem das Reduktionsgas und das Oxidationsgas der Nachverbrennung in einer Brennkammer separat zugeleitet und in der Brennkammer thermisch nachverbrannt werden und das Reduktionsgas bei der Zuleitung zur Brennkammer durch aus der Brennkammer weggeleitetes, thermisch nachverbranntes heißes Reingas rekuperativ erhitzt wird,
   dadurch gekennzeichnet, dass
   sowohl das Reduktionsgas als auch das Oxidationsgas auf dem Weg der separaten Zuleitung zur Brennkammer durch aus der Brennkammer weggeleitetes heißes Reingas rekuperativ erhitzt werden.
2. Verfahren nach Ausgestaltung 1, bei dem das Reduktionsgas und das Oxidationsgas bis zu ihrer Einleitung in die Brennkammer durch das aus der Brennkammer weggeleitete Reingas rekuperativ erhitzt werden.
3. Verfahren nach Ausgestaltung 1 oder 2, bei dem das Reduktionsgas und das Oxidationsgas parallel strömend durch aus der Brennkammer weggeleitetes Reingas rekuperativ erhitzt werden.
4. Verfahren nach einer der Ausgestaltungen 1 bis 3, bei dem das Reduktionsgas und das Oxidationsgas durch den selben Mengenstrom des aus der Brennkammer weggeleiteten Reingases rekuperativ erhitzt werden.
5. Verfahren nach einer der Ausgestaltungen 1 bis 4, bei dem das Reduktionsgas und das Oxidationsgas vertikal nach oben strömend durch das aus der Brennkammer weggeleitete Reingas rekuperativ erhitzt werden.
6. Verfahren nach einer der Ausgestaltungen 1 bis 5, bei dem das Reduktionsgas und das Oxidationsgas bei ihrer separaten Zuleitung in die Brennkammer durch das aus der Brennkammer weggeleitete Reingas im Gegenstrom oder im Kreuzgegenstrom erhitzt werden.
7. Verfahren nach einer der Ausgestaltungen 1 bis 6, bei dem das Reduktionsgas und das Oxidationsgas bei ihrer separaten Zuleitung in die Brennkammer auf eine Temperatur von mindestens 600°C, vorzugsweise von mindestens 700°C, weiterhin vorzugsweise von mindestens 750°C, insbesondere etwa 780°C vorerwärmt werden.
8. Verfahren nach einer der Ausgestaltungen 1 bis 7, bei dem zum Starten der Nachverbrennung die Brennkammer durch eine elektrische Widerstandsheizung oder eine andere Heizeinrichtung und/oder durch einen Gasbrenner oder eine andere Feuerungseinrichtung zumindest auf eine Temperatur oberhalb der Zündtemperatur der Eduktgasmischung vorgeheizt wird.
9. Verfahren nach Ausgestaltung 8, bei dem zum Starten der Nachverbrennung von den beiden Eduktgasen zunächst das Oxidationsgas in die vorgeheizte Brennkammer geleitet wird, diese kurzzeitig spült und erst anschließend das nachzuverbrennende Reduktionsgas mit allmählich zunehmendem Volumenstrom zugeschaltet wird, bis das bei der Verbrennung entstehende heiße Reingas die Eduktgase so weit vorwärmt, dass die exotherme Verbrennung des Reduktionsgases in der Brennkammer genügt, um die für die Nachverbrennung erforderliche Prozesstemperatur ohne Unterstützung durch die Heizeinrichtung oder die Feuerungseinrichtung stabil zu halten und dann die Heizeinrichtung oder Feuerungseinrichtung abgeschaltet wird.
10. Verfahren nach einer der Ausgestaltungen 1 bis 9, bei dem gesondert von einem für die rekuperative Erhitzung der Eduktgase aus der Brennkammer weggeleiteten ersten Teilstrom des heißen Reingases ein zweiter Teilstrom des heißen Reingases aus der Brennkammer weggeleitet wird, um den Druck und die Temperatur in der Brennkammer einzustellen, und/oder der zweite Teilstrom des heißen Reingases einem nachgeschalteten Energiewandler zum Umwandeln von Wärmeenergie in mechanische oder in elektrische Energie zugeführt wird.
11. Verfahren nach Ausgestaltung 10, bei dem das aus der Brennkammer separat weggeleitete Reingas zur Energiewandlung in mindestens einem der nachfolgenden Energiewandler eingesetzt wird: Dampfturbine, Sterlingmotor, Dampfmaschine oder eine andere Wärmekraftmaschine.
12. Verfahren nach Ausgestaltung 10 oder 11, bei dem zur Druck- und Temperaturregelung in der Brennkammer der zweite Mengenstrom des heißen Reingases geregelt wird.
13. Verfahren nach einer der Ausgestaltungen 1 bis 12, bei dem in einem Fall, in dem die Anteile von brennbaren Kohlenwasserstoffen im Oxidationsgas so gering sind, dass die exotherme Verbrennungsreaktion trotz der rekuperativen Vorwärmung der Eduktgase nicht ausreicht, um die für den Verbrennungsprozess notwendige Temperatur in der Brennkammer sicher zu erreichen und zu halten, das Reduktionsgas vor der rekuperativen Erhitzung mit Erdgas oder Propan oder einem anderen Brenngas angereichert wird, um die Verbrennung bei genügend hoher Temperatur stabil ablaufen zu lassen.
14. Verfahren nach einer der Ausgestaltungen 8 bis 13, bei dem in einem Fall, in dem die Anteile von brennbaren Kohlenwasserstoffen im Oxidationsgas so gering sind, dass die exotherme Verbrennung trotz der rekuperativen Vorwärmung der Eduktgase nicht ausreicht, um die für die Verbrennung notwendige Temperatur in der Brennkammer sicher zu erreichen oder zu halten, die Brennkammer mittels der Heizeinrichtung oder der Feuerungseinrichtung auch über die Startphase hinaus beheizt und auf der notwendigen Verbrennungstemperatur dauerhaft gehalten wird.
15. Verfahren nach einer der Ausgestaltungen 1 bis 14, bei dem die Mengenströme der Reduktions- und Oxidationsgase auf ein Verhältnis geregelt werden, welches als Regelgröße eine Lambda-Regelung, also eine Sauerstoffkonzentration im Reingas benutzt und auf Sauerstoffgehalte von mindestens 0,5 Volumenprozent Sauerstoff im Reingas regelt.
16. Verfahren nach einer der Ausgestaltungen 1 bis 15, bei dem das Reingas aus der Brennkammer durch eine offen poröse keramische Schicht weggeleitet wird, welche einerseits die Wärmestrahlung von der Brennkammer in den Leitungsweg des Reingases verringert, andererseits die Verbrennung in der Brennkammer verbessert, indem in ihrer Porenstruktur eine starke Verwirbelung bei gleichzeitig hoher Temperatur die Oxidation des Reduktionsgases final abschließt, bevor das thermisch nachverbrannte Reingas der rekuperativen Erhitzung der Eduktgase zugeleitet wird.
17. Verfahren nach einer der Ausgestaltungen 1 bis 16, bei dem die Querschnitte der Leitungen zum Zuleiten der Eduktgase in die Brennkammer an die Mengenstromverhältnisse der Eduktgase angepasst werden, um die Eduktgase gleichermaßen rekuperativ zu erhitzen, und/oder bei dem das Volumen der Brennkammer an die Mengenströme der Eduktgase angepasst wird, um die erforderliche Verweilzeit für die thermische Nachverbrennung der Eduktgase sicherzustellen.
18. Verfahren nach einer der Ausgestaltungen 1 bis 17, bei dem die rekuperative Erhitzung von Reduktionsgas und Oxidationsgas sowie die Nachverbrennung in einem gegenüber der Umgebung thermisch isolierten Bereich durchgeführt wird und/oder bei dem die Nachverbrennung des Reduktionsgases in einem gegenüber der Umgebung optisch abgeschirmten Bereich durchgeführt wird.
19. Verfahren nach einer der Ausgestaltungen 1 bis 18, bei dem eine Nachverbrennung des Reduktionsgases bereits im letzten Abschnitt des Weges der Zuleitung des Reduktionsgases und des Oxidationsgases in die Brennkammer durchgeführt wird.
20. Verfahren nach Ausgestaltung 19, bei dem ein Teil der Wärme beim Temperaturniveau der Nachverbrennung über Wärmestrahlung im letzten Abschnitt des Weges der Zuleitung von Reduktionsgas und Oxidationsgas in die Brennkammer auf die Eduktgase übertragen wird.
21. Vorrichtung zur thermischen Nachverbrennung von Abgasen aus unvollkommenen Verbrennungs- oder Ofenprozessen, Schwelgasen, Deponiegasen, Schmauchgasen aus keramischen Ofenprozessen, Gasen aus Hausmüll- oder Biokompostieranlagen, Schwachgasen oder anderen Kohlenwasserstoffe enthaltenden Reduktionsgasen mittels Luft oder anderen Oxidationsgasen mit einer Brennkammer, die separate Einlässe für Reduktionsgas und Oxidationsgas und einen Auslass für thermisch nachverbranntes heißes Reingas aufweist, und mindestens einen rekuperativen Wärmetauscher mit mindestens einem primärseitigen Strömungskanal, dessen Einlass mit dem Auslass für heißes Reingas der Brennkammer verbunden ist, und mindestens einem sekundärseitigen Strömungskanal, der einen Einlass für das Reduktionsgas und einen Auslass hat, der mit dem Einlass der Brennkammer für Reduktionsgas verbunden ist,
   dadurch gekennzeichnet, dass
   der rekuperative Wärmetauscher sowohl mindestens einen sekundärseitigen Strömungskanal für das Reduktionsgas als auch mindestens einen sekundärseitigen Strömungskanal für das Oxidationsgas aufweist, der einen Einlass für das Oxidationsgas und einen Auslass aufweist, der mit dem Einlass für das Oxidationsgas der Brennkammer verbunden ist.
22. Vorrichtung nach Ausgestaltung 21, bei der für einen Betrieb des Wärmetauschers im Gegenstrom ein Einlass mindestens eines primärseitigen Strömungskanals, der den Auslässen der sekundären Strömungskanäle benachbart ist, mit dem Auslass der Brennkammer für heißes Reingas verbunden ist.
23. Vorrichtung nach Ausgestaltung 21 oder 22, bei der die Auslässe der sekundärseitigen Strömungskanäle direkt mit den Einlässen für Eduktgase des Brennraumes verbunden sind und der Einlass des primärseitigen Strömungskanals direkt mit dem Auslass der Brennkammer für heißes Reingas verbunden ist.
24. Vorrichtung nach einer der Ausgestaltungen 21 bis 22, bei der der Wärmetauscher in einem Gehäuse parallele gerade Rohre aufweist, von denen eine erste Gruppe mit ihren Öffnungen an einem ersten Ende in einem ersten Verteilerraum für das Reduktionsgas mündet, der den Einlass für das Reduktionsgas aufweist, und mit ihren Öffnungen an einem zweiten Ende in der Brennkammer mündet, von denen eine zweite Gruppe mit ihren Öffnungen an einem ersten Ende in einem zweiten Verteilerraum für das Oxidationsgas mündet, der einen Einlass für Oxidationsgas aufweist, und mit ihren Öffnungen an einem zweiten Ende in der Brennkammer mündet, und bei dem der Mantelraum zwischen den parallelen Rohren und dem Gehäuse an einem ersten Ende über eine Öffnung mit der Brennkammer verbunden ist und an einem zweiten Ende einen Auslass für abgekühltes Reingas aufweist.
25. Vorrichtung nach Ausgestaltung 24, bei der die Brennkammer und der Wärmetauscher zu einer baulichen Einheit zusammengefasst sind.
26. Vorrichtung nach Ausgestaltung 25, bei der die Brennkammer von einem Gehäuse umschlossen ist, das fest mit dem Gehäuse des Wärmetauschers verbunden ist und mit diesem ein gemeinsames Gehäuse bildet.
27. Vorrichtung nach einer der Ausgestaltungen 21 bis 26, bei der die Rohre und/oder das Gehäuse der Brennkammer und/oder den Wärmetauscher einen zylindrischen und/oder einen mehreckigen Querschnitt aufweisen.
28. Vorrichtung einer der Ausgestaltungen 21 bis 27, bei der die Brennkammer einen zweiten Auslass für heißes Reingas und ein mit dem zweiten Auslass verbundenes Ventil zum Einstellen des aus dem zweiten Auslass abströmenden Mengenstromes aufweist.
29. Vorrichtung nach Ausgestaltung 28, bei der das Ventil einen feuerfesten, konischen Verschlussstopfen und einen konischen Dichtsitz in dem zweiten Auslass der Brennkammer aufweist.
30. Vorrichtung nach einer der Ausgestaltungen 21 bis 29, bei der die Brennkammer und der Wärmetauscher thermisch isoliert sind.
31. Vorrichtung nach einer der Ausgestaltungen 21 bis 30, bei der der Wärmetauscher mit den Rohren vertikal angeordnet ist, sodass die Strömung der kalten Eduktgase durch die Rohre von unten nach oben und die Strömung des heißen Reingases durch den Mantelraum von oben nach unten erfolgt.
32. Vorrichtung nach einer der Ausgestaltungen 21 bis 31, bei der der Wärmetauscher im Mantelraum Schikanen zur Queranströmung der Rohre aufweist.
33. Vorrichtung nach einer der Ausgestaltungen 24 bis 32, bei der die Rohre im Wärmetauscher an Lochplatten festgehalten und/oder durch Lochplatten in axialer Richtung geführt sind und/oder Schikanen durch Lochplatten gebildet sind.
34. Vorrichtung nach einer der Ausgestaltungen 24 bis 33, bei der die Rohre des Wärmetauschers Abschnitte haben, die aus Edelstahlrohren gefertigt sind und in Löcher von Lochplatten gasdicht eingeschweißt sind, welche die Verteilerräume für das Reduktionsgas und das Oxidationsgas begrenzen.
35. Vorrichtung nach einer der Ausgestaltungen 24 bis 34, bei der die Rohre in der Brennkammer mündende zweite Abschnitte aufweisen, die aus gasdichtem Silizium infiltriertem Siliziumcarbid (SiC) gefertigt sind, die vorzugsweise Temperaturen bis 1360°C widerstehen und sich frei in ihrer Länge ausdehnen können, da diese Abschnitte der Rohre nur jeweils an einer Position in ihrer Längsrichtung fixiert sind und sich im Übrigen in ihrer Längsrichtung frei ausdehnen können.
36. Vorrichtung nach Ausgestaltung 34 und 35, bei der die ersten Abschnitte der Rohre aus Edelstahl und die zweiten Abschnitte der Rohre aus SiC koaxial aufeinander ausgerichtet und an einem Ende fest miteinander verbunden sind.
37. Vorrichtung nach Ausgestaltung 36, bei der die Fügestelle zwischen den ersten Abschnitten der Rohre aus Edelstahl und den zweiten Abschnitten der Rohre aus SiC einen von den ersten Abschnitten mit Abstand von einem Ende nach außen vorstehenden Kragen und ein an den Kragen angeschweißten Rohrstück aus Edelstahl mit einem Ringspalt zwischen dem Rohrstück und dem ersten Abschnitt umfasst, wobei die zweiten Abschnitte mit ihren Endbereichen in die Ringspalte eingesetzt sind und auf dem Kragen aufsitzen.
38. Vorrichtung nach Ausgestaltung 37, bei dem die zweiten Abschnitte in den Ringspalten mittels eines keramischen Klebstoffes auf SiC-Basis oder Aluminiumoxyd-Basis eingeklebt sind, so dass eine hinreichende Gasdichtigkeit zwischen Rohren und Mantelraum gegeben ist.
39. Vorrichtung nach einer der Ausgestaltungen 32 bis 38, bei der die Schikanen aus Cordieritkeramik gefertigt sind, die vorzugsweise eine Temperaturfestigkeit bis ca. 1260 °C haben.
40. Vorrichtung nach einer der Ausgestaltungen 32 oder 39, bei der die Schikanen weitere Löcher aufweisen, welche die Rohre mit nur geringem Spiel umfassen, und somit die Rohre voneinander auf Abstand halten und eine Ausdehnung der Rohre in Längsrichtung zulassen.
41. Vorrichtung nach einer der Ausgestaltungen 32 bis 40, bei der die Schikanen horizontal ausgerichtet sind und auf mindestens zwei Keramikrohren aufliegen, welche selbst an der Innenseite des Gehäuses des Wärmetauschers oder an der Innenseite der Isolation des Gehäuses befestigt sind.
42. Vorrichtung nach einer der Ausgestaltungen 24 bis 41, bei der eine offen poröse keramische Schicht einen unteren Teil der Brennkammer, in den die Rohre mit den Öffnungen an ihren ersten Enden münden, abschließt, um einerseits die unmittelbare Wärmestrahlung vom Brennraum in den Bereich um die Rohre zu minimieren, andererseits die im Brennraum stattfindende Verbrennung zu verbessern, indem in der Porenstruktur der keramischen Schicht starke Verwirbelungen bei gleichzeitig hoher Temperatur die Oxidation des Reduktionsgases final abschließt, bevor das Reingas um die Rohre im Gegenstrom und ggfs. mittels Schikanen im Kreuzgegenstrom zu den Eduktgasen weggeleitet wird.
43. Vorrichtung nach Ausgestaltung 42, bei der eine offen poröse keramische Schicht aus hoch porösen Calzium-Hexa-Aluminat Granulaten aufgebaut ist.
44. Vorrichtung nach einer der Ausgestaltungen 21 bis 43, die ein metallisches Gehäuse aufweist, das zur Brennkammer und/oder zu dem Wärmetauscher auf die dort jeweils anstehenden Temperaturen angepasst thermisch isoliert ist, sodass die entstehende Wärme weitestgehend im Gehäuse verbleibt.
45. Vorrichtung nach Ausgestaltung 44, bei der die Isolation des Gehäuses aus Glas- oder Keramikwolle oder aus anderen Faserwerkstoffen oder aus Feuerleichtsteinen oder Feuerleichtbeton aufgebaut ist.
46. Vorrichtung nach Ausgestaltung 45, bei der die Isolation aus einem Feuerleichtbeton aufgebaut ist, dessen volumetrischer Hauptbestandteil aus Calzium-Hexa-Aluminat besteht und somit sowohl hinreichend feuerfest auch für die Isolation der Brennkammer ist, als auch eine genügende abrasive und chemische Beständigkeit gegen die Verbrennungsgase aufweist.
47. Vorrichtung nach einer der Ausgestaltungen 34 bis 46, bei der die den ersten Verteilerraum begrenzende erste Lochplatte, auf die das Reingas vor dem Austritt aus dem Auslass für Reingas zuströmt, mit einer keramischen Isolation versehen ist, sodass die erste Lochplatte sowie die Einschweißstellen vor thermischer Belastung und chemisch korrosivem Angriff geschützt ist.
48. Vorrichtung nach einer der Ausgestaltungen 21 bis 47, bei der die Brennkammer einen Doppelmantel hat, der voneinander getrennte Mantelkammern aufweist, wobei die erste Mantelkammer einen weiteren Einlass und einen Auslass für Reduktionsgas aufweist und die zweite Mantelkammer einen weiteren Einlass und einen Auslass für Oxidationsgas aufweist und der Auslass für Reduktionsgas mit dem Einlass des sekundärseitigen Strömungskanals für Reduktionsgas des Wärmetauschers und der Auslass des Oxidationsgases mit dem Einlass des sekundärseitigen Strömungskanals für Oxidationsgas des Wärmetauschers verbunden ist, um das Reduktionsgas und das Oxidationsgas vor dem Eintritt in den Wärmetauscher zusätzlich aufzuheizen und um die Brennkammer zu kühlen.
49. Vorrichtung nach einer der Ausgestaltungen 21 bis 48, bei der die Brennkammer den Brennraum gegenüber der Umgebung optisch abschirmt.
50. Vorrichtung nach einer der Ausgestaltungen 24 bis 49, bei der die Öffnungen an den zweiten Enden der ersten und zweiten Gruppe Rohre auf demselben oder auf einem unterschiedlichen Niveau in der Brennkammer münden.
51. Vorrichtung nach einer der Ausgestaltungen 42 bis 50, bei der die offen poröse keramische Schicht an den Öffnungen an dem zweiten Ende der ersten Gruppe Rohre für das Reduktionsgas Löcher für den Durchtritt des Reduktionsgases aufweist, wobei der Öffnungsquerschnitt dieser Löcher der keramischen Schicht dem Öffnungsquerschnitt der Öffnungen der Rohre der ersten Gruppe entspricht.

Die Erfindung wird nachfolgend anhand der anliegenden Zeichnungen von Ausführungsbeispielen näher erläutert. In den Zeichnungen zeigen:
- Fig. 1: eine Vorrichtung zur thermischen Nachverbrennung in einem Vertikalschnitt;
- Fig. 2: die Anordnung der Rohre des Wärmetauschers der Vorrichtung in Lochplatten in einem vertikalen Teilschnitt;
- Fig. 3: die Anordnung der unteren Abschnitte der Rohre des Wärmetauschers in Lochplatten in einer perspektivischen Teilansicht;
- Fig. 4: die Anordnung der oberen Abschnitte der Rohre des Wärmetauschers in Lochplatten in einer perspektivischen Teilansicht;
- Fig. 5: den oberen Abschnitt eines Rohres des Wärmetauschers in einer vergrößerten Perspektivansicht schräg von oben und auf die Seite;
- Fig. 6a+b: Verbindung des unteren Abschnittes mit dem oberen Abschnitt eines Rohres des Wärmetauschers vor dem Zusammenfügen der beiden Abschnitte (Fig. 6a) und nach dem Zusammenfügen der beiden Abschnitte (Fig. 6b) in einem Längsschnitt;
- Fig. 7a+b: Verbindung des unteren Abschnitts mit dem oberen Abschnitt eines Rohres des Wärmetauschers vor dem Zusammenfügen der beiden Abschnitte (Fig. 7a) und nach dem Zusammenfügen der beiden Abschnitte (Fig. 7b) in einer perspektivischen Ansicht schräg von oben und von der Seite;
- Fig. 8: eine weitere Vorrichtung zur thermischen Nachverbrennung mit zusätzlicher Vorwärmung der Eduktgase am Mantel der Brennkammer in einem Vertikalschnitt;
- Fig. 9: dieselbe Vorrichtung vertikal geschnitten in einer Perspektivansicht schräg von oben und von der Seite;
- Fig. 10: dieselbe Vorrichtung in einem perspektivischen Röntgenbild schräg von oben und von der Seite;
- Fig. 11: dieselbe Vorrichtung in einem Schnitt durch die Ebene XI in Fig. 10;
- Fig. 12: unterer Abschnitt der Rohre eines Wärmetauschers für flexible Verteilung von Rohgas und Luft auf die Rohre in einem Vertikalschnitt;
- Fig. 13: dieselbe Anordnung in einer Perspektivansicht schräg von oben und von der Seite;
- Fig. 14: dieselbe Anordnung in einer Perspektivansicht schräg von unten und von der Seite.

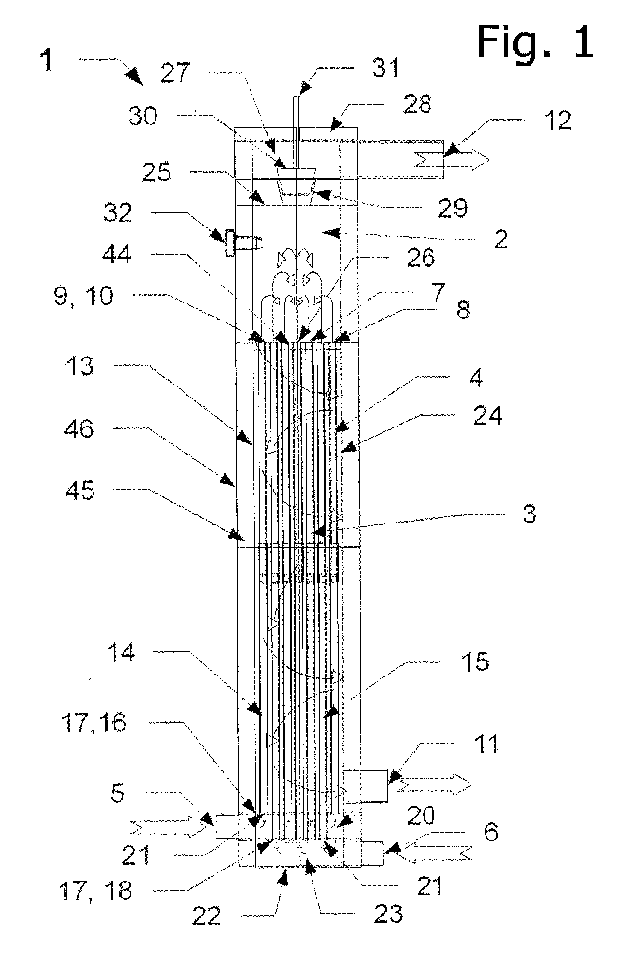

Gemäß Fig. 1 umfasst eine erfindungsgemäße Vorrichtung 1 eine Brennkammer 2 und einen Wärmetauscher 3. Der Wärmetauscher 3 ist als Rohrbündel-Wärmetauscher mit vertikalen Rohren 4 ausgebildet. Die Brennkammer 2 ist oberhalb des Wärmetauschers 3 angeordnet.

Der Wärmetauscher hat unten Einlässe 5, 6 für Rohgas und Verbrennungsluft und oben Auslässe 7 für erwärmtes Rohgas und erwärmte Verbrennungsluft 8.

Die Brennkammer 2 hat unten einen ersten Auslass 9 für heißes Reingas, der mit einem Einlass 10 des Wärmetauschers 3 für heißes Reingas verbunden ist. Unten hat der Wärmetauscher 3 einen Auslass 11 für abgekühltes Reingas.

Ferner hat die Brennkammer oben einen zweiten Auslass 12 für heißes Reingas.

Die Brennkammer 2 und der Wärmetauscher 3 sind baulich durch ein gemeinsames Gehäuse 13 zu einer Einheit zusammengefasst. Die Einheit wird auch als "Reaktor" bezeichnet.

Das Gehäuse 13 ist säulenförmig, wobei es einen kreisförmigen oder elliptischen oder mehreckigen Querschnitt aufweisen kann. Im Beispiel hat das Gehäuse einen rechteckigen Querschnitt.

Die Einlässe 5, 6 für Rohgas und Verbrennungsluft sowie der zweite Auslass 12 für Reingas sind durch die Wand des Gehäuses 13 nach außen herausgeführt.

Die Rohre 4 des Wärmetauschers sind in einem Rohrbündel parallel zueinander ausgerichtet. Das Rohrbündel umfasst zwei Gruppen 14, 15 Rohre 4. Die Rohre 4 einer ersten Gruppe 14 sind unten an ihrem ersten Ende in erste Löcher 16 einer ersten Lochplatte 17 eingesetzt und eingeschweißt, die senkrecht zu den Rohren 4 ausgerichtet und etwas oberhalb des Einlasses 5 für Rohgas angeordnet ist. Die erste Lochplatte 17 ist an ihrem Umfang mit der seitlichen Wand des Gehäuses 13 verschweißt.

Die Rohre 4 der zweiten Gruppe 15 sind unten an ihrem ersten Ende in zweite Löcher 18 einer zweiten Lochplatte 19 eingesetzt und mit dieser verschweißt, die senkrecht zu den Rohren 4 ausgerichtet und zwischen den Einlässen 5, 6 für Rohgas und Verbrennungsluft angeordnet ist. Die zweite Lochplatte 19 ist ebenfalls an ihrem Umfang mit der seitlichen Wand des Gehäuses 13 verschweißt.

Die erste und die zweite Lochplatte 17, 19 begrenzen gemeinsam mit einem Abschnitt der seitlichen Wand des Gehäuses 13 einen ersten Verteilerraum 20 für das Reduktionsgas, in den die Öffnungen 21 an den ersten Enden der ersten Gruppe 14 Rohre 4 münden.

Die zweite Lochplatte 19 begrenzt gemeinsam mit einer Bodenwand 22 des Gehäuses 13 und einem weiteren Abschnitt der seitlichen Wand des Gehäuses 13 einen zweiten Verteilerraum 23, in den die Öffnungen 21 an den ersten Enden der Rohre 4 der zweiten Gruppe 15 münden.

Oberhalb der Lochplatten 17 und 19 begrenzt die seitliche Wand des Gehäuses 13 einen Mantelraum 24 des Wärmetauschers 3, in dem sich die Rohre 4 mit einem Abstand voneinander und mit einem Abstand von der seitlichen Wand des Gehäuses 13 erstrecken. Die oberen Enden beider Gruppen 14, 15 Rohre 4 begrenzen zugleich unten die Brennkammer 2. Am Umfang ist die Brennkammer 2 durch die seitliche Wand des Gehäuses 13 begrenzt. Oben ist die Brennkammer 2 durch eine horizontale obere Kammerwand 25 begrenzt, die am Umfang mit der seitlichen Wand des Gehäuses 13 verschweißt ist.

Öffnungen 26 an den zweiten Enden der Rohre 4 münden somit unten in der Brennkammer 2. Der freie Querschnitt im Mantelraum 24 zwischen den zweiten Enden der Rohre 4 bildet zugleich den ersten Auslass 9 der Brennkammer 2 für Reingas und den Einlass 10 des Wärmetauschers 3 für Reingas.

Oberhalb der oberen Kammerwand 25 ist ein Sammelraum 27 vorhanden, der am Umfang von der seitlichen Wand des Gehäuses begrenzt ist und oben von einer Deckwand 28 des Gehäuses. Der Sammelraum 27 ist mit dem zweiten Auslass 12 für Reingas verbunden.

In der oberen Kammerwand 25 ist zentral ein Ventilsitz 29 in Form einer konischen Öffnung angeordnet. In dem Ventilsitz 29 ist ein Stopfen 30 angeordnet, der eine entsprechende konische Form aufweist. Der Stopfen 30 ist mittels einer Hubstange 31, die durch die Deckwand 28 des Gehäuses 12 nach außen herausgeführt ist, innerhalb der Öffnung 29 verlagerbar, sodass der freie Öffnungsquerschnitt der Öffnung 29 durch Verstellen der Lage des Stopfens 30 einstellbar ist.

Durch die seitliche Wand des Gehäuses 13 hindurch ist ein Gasbrenner 32 von außen in den Brennraum 33 in der Brennkammer 2 eingeführt.

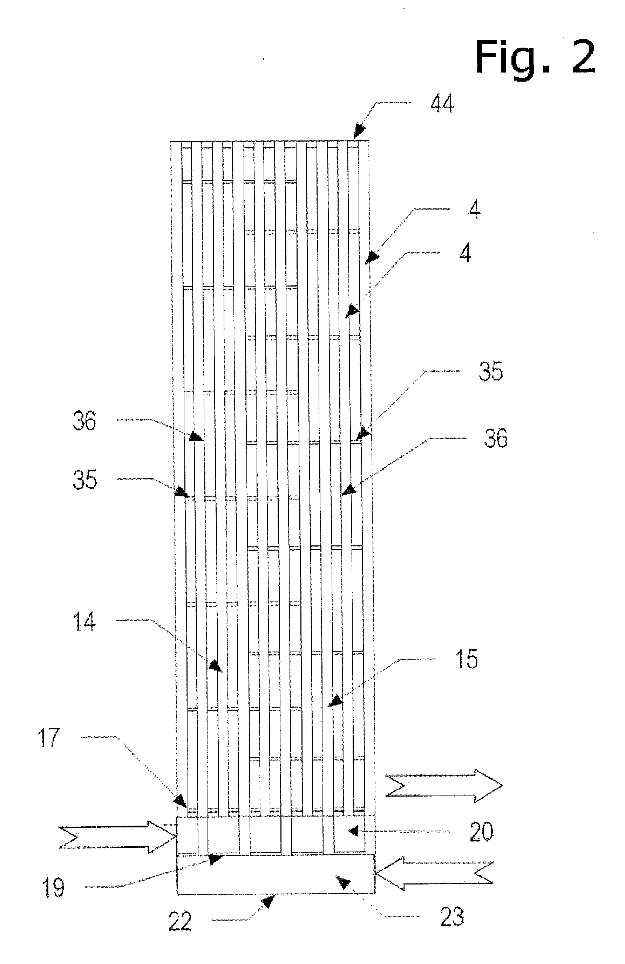

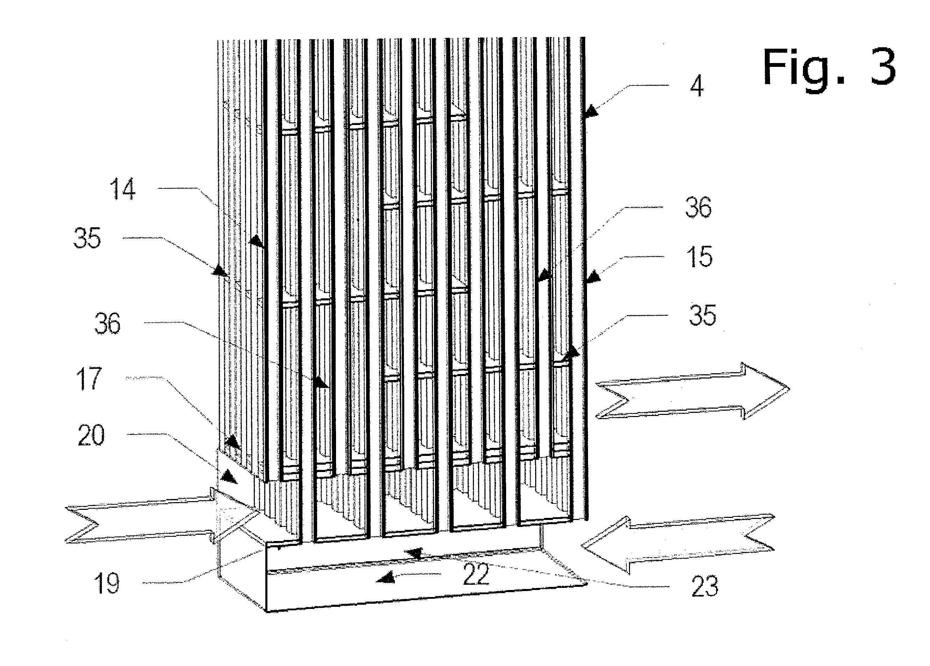

Gemäß Fig. 2 und 3 sind die Rohre 4 der beiden Gruppen oberhalb der ersten und zweiten Lochplatten 17, 19 durch weitere Löcher 34 in senkrecht zu den Rohren 4 ausgerichteten weiteren Lochplatten 35 hindurchgeführt. Die weiteren Lochplatten 35 sind seitlich an der seitlichen Wand des Gehäuses 13 gehalten. Die weiteren Lochplatten 35 sind in Längsrichtung der Rohre 4 mit Abstand voneinander angeordnet. Sie erstrecken sich jeweils nur über einen Teil des Querschnitts des Mantelraums 24, sodass neben jeder weiteren Lochplatte 35 ein freier Querschnitt 36 für das Durchströmen des Reingases verbleibt. Der freie Querschnitt 36 ist von weiterer Lochplatte 35 zu weiterer Lochplatte 35 versetzt auf verschiedenen Seiten des Gehäuses 13 angeordnet. Die weiteren Lochplatten 35 bilden zugleich Schikanen, die den Mengenstrom des Reingases quer zu den Rohren leiten.

Der Auslass 11 für abgekühltes Reingas mündet zwischen der ersten Lochplatte 17 und der dazu benachbarten weiteren Lochplatte 35 im Mantelraum 24.

Die Rohre 4 sind in den weiteren Lochplatten 35 lediglich seitlich geführt, sodass sie sich in Längsrichtung und auch in Querrichtung ungehindert dehnen können, wenn sie auf Betriebstemperatur erhitzt werden.

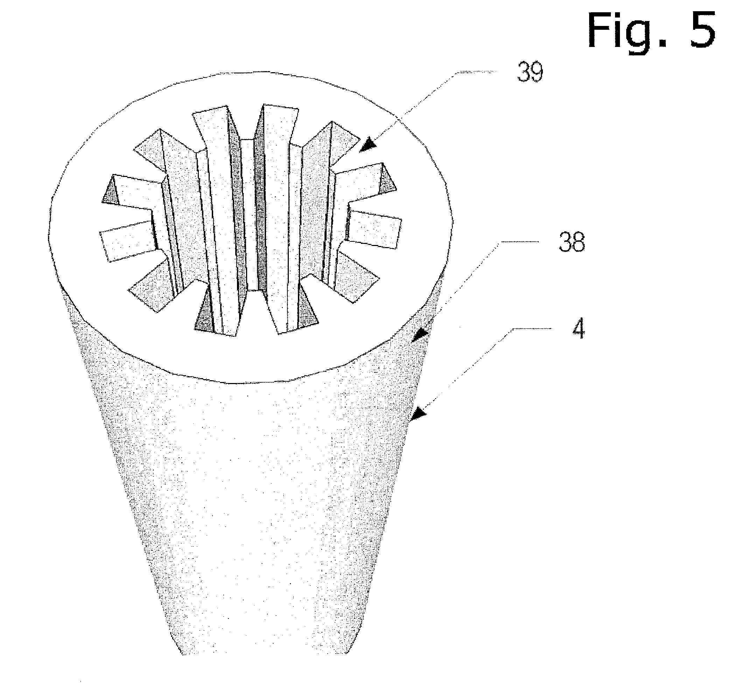

Die Rohre 4 beider Gruppen 14, 15 weisen jeweils zwei Abschnitte 37, 38 auf, wobei ein erster Abschnitt 37 aus Edelstahl mit den ersten bzw. zweiten Lochplatten 17, 19 verschweißt ist und ein zweiter Abschnitt 38 aus SiC oder einem anderen hochtemperaturfesten Material sich bis zur Brennkammer 2 erstreckt. Die Rohre 4 sind somit jeweils aus zwei Rohren aus verschiedenen Materialien zusammengesetzt. Die Rohre des ersten Abschnittes 37 sind beispielsweise hohlzylindrisch. Die Rohre des zweiten Abschnittes 38 haben beispielsweise eine Querschnittsform mit einem kreisförmigen Außenumfang und einen kreisförmigen Innenumfang und vom Innenumfang vorstehenden, in Längsrichtung der Rohre 4 erstreckten Rippen 39, wie in Fig. 5 gezeigt.

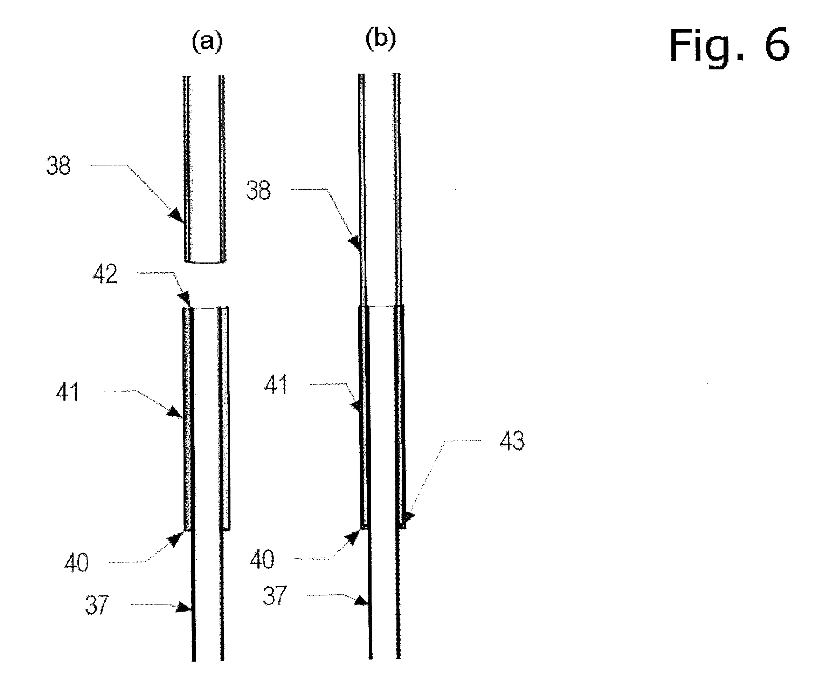

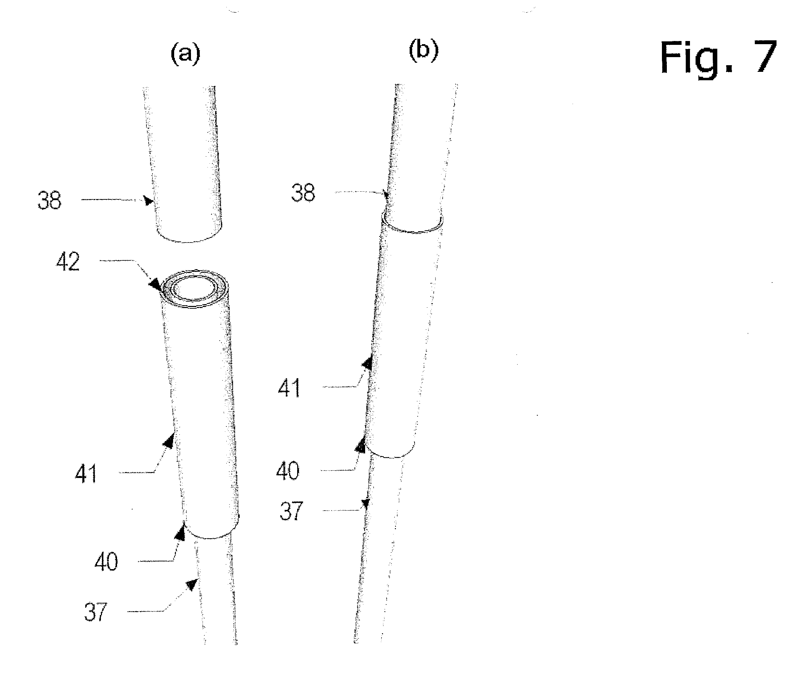

Die ersten und zweiten Abschnitte 37, 38 sind beispielsweise so zusammengefügt, wie in den Fig. 6 und 7 gezeigt. Bei dieser Ausgestaltung der Fügestellen haben die ersten Abschnitte 37 der Rohre 4 in einem Abstand von einem Ende einen nach außen vorstehenden Kragen 40 und ein an den Kragen angeschweißtes Rohrstück 41 aus Edelstahl. Zwischen dem Rohrstück 41 und dem ersten Abschnitt 37 ist ein Ringspalt 42 vorhanden. In den Ringspalt 42 ist der zweite Abschnitt 38 des Rohrs 4 eingesetzt und darin mittels eines geeigneten Klebstoffes 43 eingeklebt. Bei dem Klebstoff 43 handelt es sich beispielsweise um einen keramischen Klebstoff.

Diese Ausführung des Wärmetauschers 3 ermöglicht zugleich eine Fixierung der Rohre 4 durch Verschweißen, eine freie Dehnbarkeit der Rohre 4 in Längs- und Querrichtung und eine hinreichende Temperaturbeständigkeit in dem Bereich des Wärmetauschers 3 direkt neben der Brennkammer 2, der im Betrieb besonders hohe Temperaturen annimmt.

Im freien Querschnitt des Mantelraums 24 zwischen den zweiten Enden der Rohre 4 ist eine offen poröse keramische Schicht 44 angeordnet. Diese ist z.B. durch eine Schüttung keramischer Teilchen auf einem Gitter gebildet oder durch eine zusammenhängende poröse Platte mit Löchern oberhalb der zweiten Enden der Rohre 4.

Auf der Außenseite der seitlichen Wand des Gehäuses 13 ist eine Isolation 45 angebracht. Die Isolation 45 ist außen durch ein äußeres Gehäuse 46 abgedeckt.

Im Betrieb werden der Brennkammer 2 das Rohgas und die Verbrennungsluft über den Wärmetauscher 3 zugeführt. Die Zündung der Eduktgase im Brennraum 33 erfolgt zu Beginn des Verfahrens über den Gasbrenner 32. Im Wärmetauscher 3 werden die Eduktgase von dem aus der Brennkammer 2 durch den ersten Auslass 9 ausströmenden Reingas bei hoher Temperatur vorgewärmt. Über das Ventil 29, 30 wird ggfs. ein zweiter Mengenstrom abgezogen und beispielsweise eine Energiewandlung zugeführt.

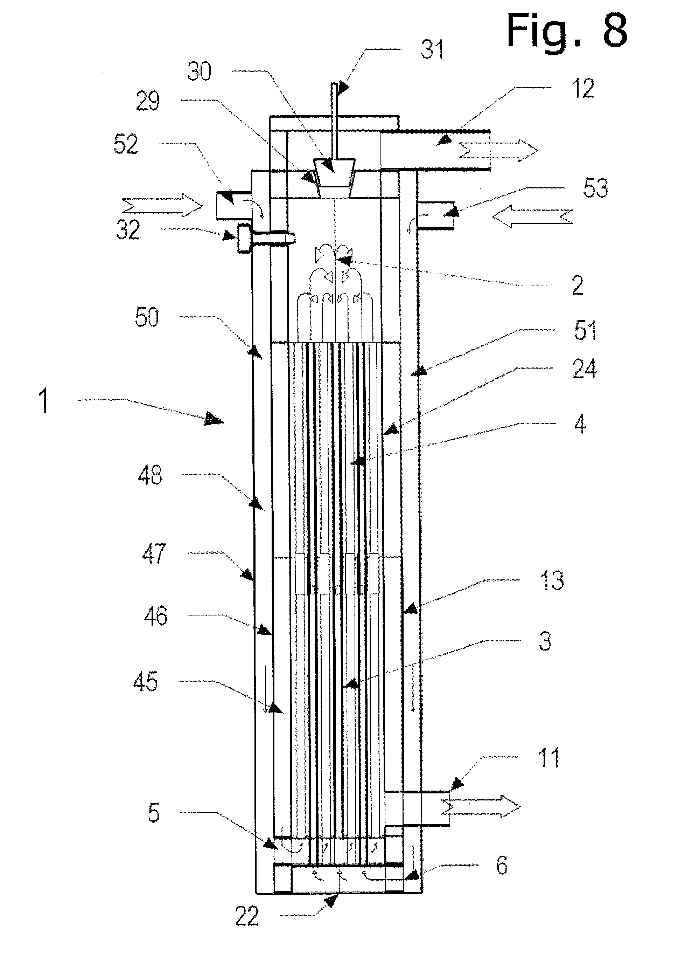

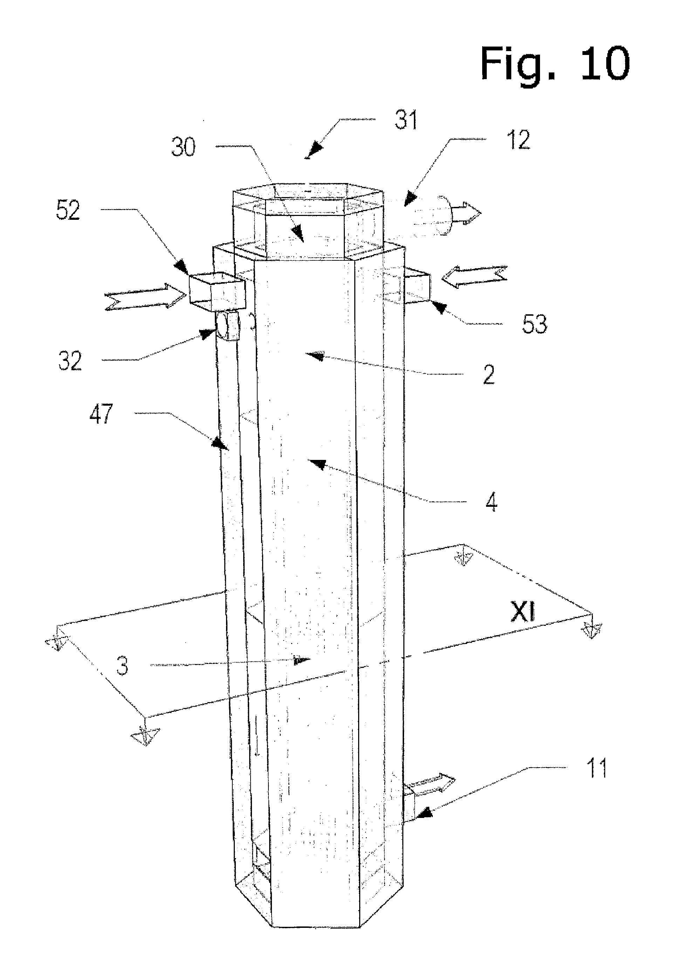

Die Vorrichtung 1 der Fig. 8 und 10 unterscheidet sich von der Vorbeschriebenen zum einen dadurch, dass das Gehäuse 13 einen sechseckigen Querschnitt aufweist. Diese Querschnittsform begünstigt eine Anordnung mehrerer Reaktoren auf engstem Raume nebeneinander und damit den modularen Aufbau von Anlagen zur thermischen Nachverbrennung.

Ein weiterer Unterschied dieser Ausführung gegenüber der Vorbeschriebenen besteht darin, dass das Gehäuse 13 ein Mantelgehäuse 47 aufweist, das in einem Abstand um das äußere Gehäuse 46 herum angeordnet ist und mit diesem einen Doppelmantel 48 bildet. Der Doppelmantel 48 ist an einander gegenüberliegenden Seiten des Gehäuses durch zwei vertikal verlaufende Trennwände 49 in zwei voneinander getrennte erste und zweite Mantelkammern 50, 51 geteilt.

Der Doppelmantel 48 erstreckt sich in Längsrichtung des Reaktors von der Brennkammer 2 bis zu den Einlässen 5, 6 des Wärmetauschers 3 für Rohgas und Verbrennungsluft. Oben ist die erste Mantelkammer 50 des Doppelmantels 48, die unten mit dem Einlass 5 des Wärmetauschers 3 für Rohgas verbunden ist, mit einem nach außen geführten weiteren Einlass 52 für Rohgas verbunden. Ferner ist die zweite Mantelkammer 51, die unten mit dem Einlass 6 des Wärmetauschers 3 für Verbrennungsluft verbunden ist, oben mit einem nach außen geführten weiteren Einlass 53 für Verbrennungsluft verbunden.

Im Betrieb wird Rohgas und Verbrennungsluft durch die weiteren Einlässe 52, 53 des Reaktors eingespeist und wird auf dem Weg zu den Einlässen 5, 6 des Wärmetauschers 3 durch aus dem äußeren Gehäuse 46 austretende Wärme vorgewärmt. Eine weitere Vorerwärmung erfolgt in der bereits beschriebenen Weise im Wärmetauscher 3. Hierdurch wird der Wirkungsgrad der Vorrichtung zur thermischen Nachverbrennung weiter gesteigert.

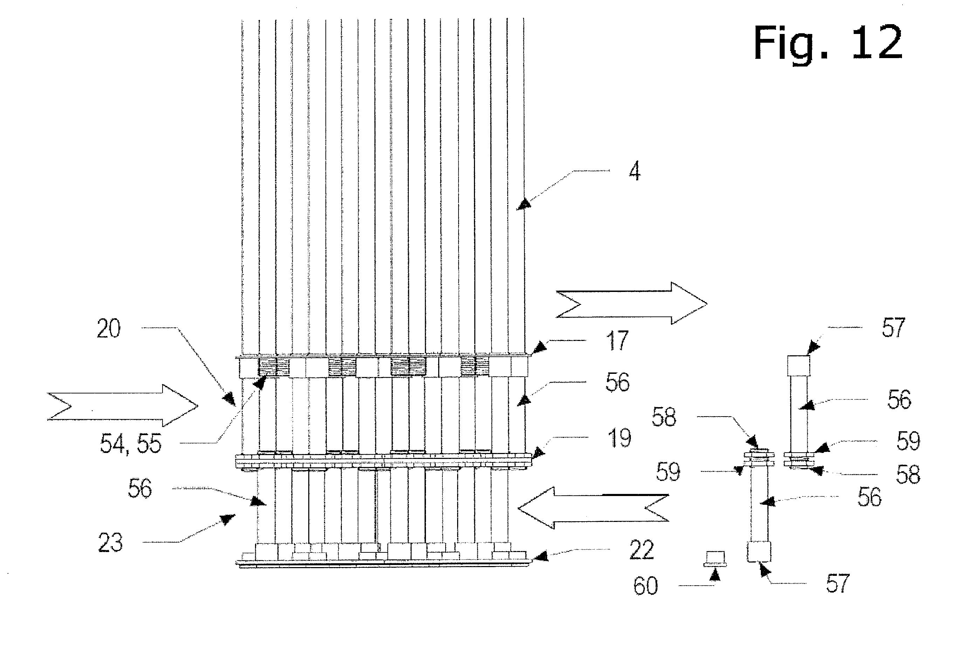

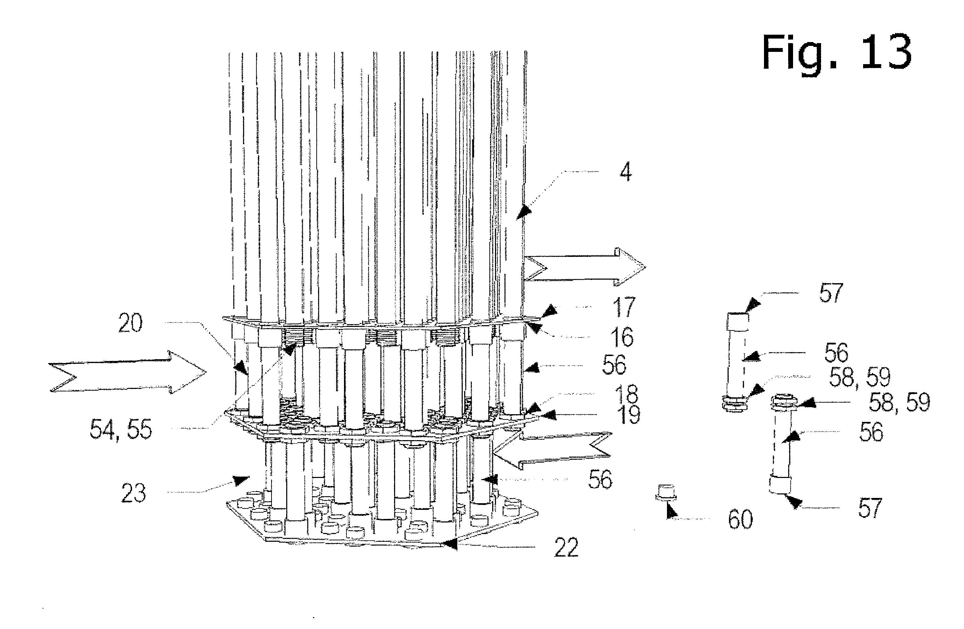

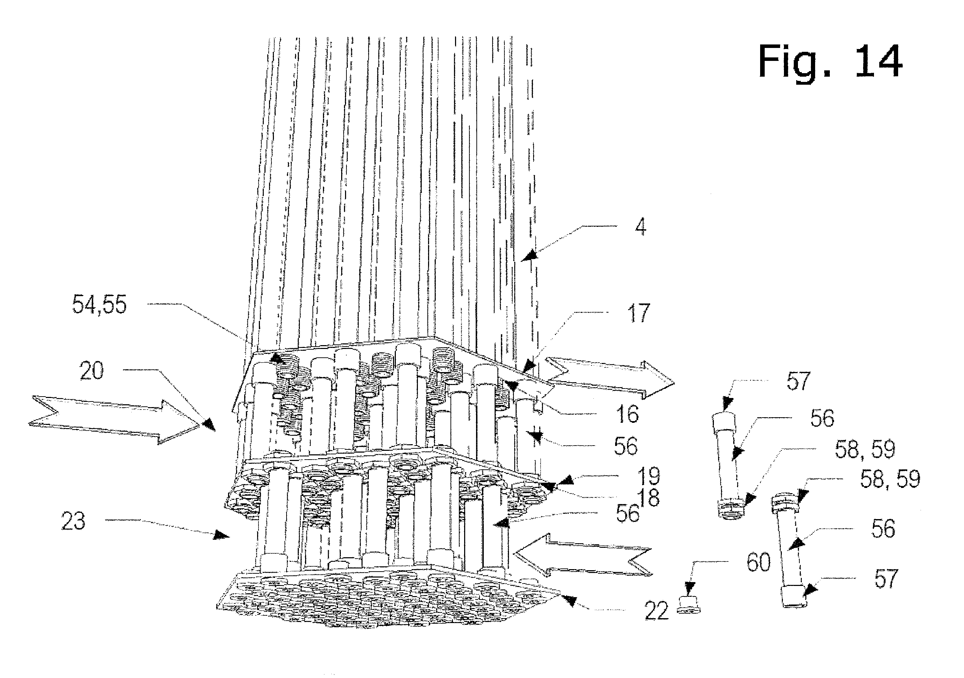

Die Ausführung von Fig. 12 bis 14 ermöglicht eine flexible Verteilung von Rohgas und Verbrennungsluft auf die Rohre 4 des Wärmetauschers 3, sodass leicht eine Anpassung an unterschiedliche Mengenströme vorgenommen werden kann.

Hierfür sind die Rohre 4 beider Gruppen 14, 15 an ihrem ersten Ende in die ersten Löcher 16 der ersten Lochplatte 17 eingesetzt und eingeschweißt. Ferner haben die Rohre 4 einen kurzen Gewindeabschnitt 54 mit einem Außengewinde 55, der unten von der ersten Lochplatte 17 vorsteht.

Die zweite Lochplatte 19 hat zweite Löcher 18, die mit den ersten Löchern 16 fluchten und zunächst nicht belegt sind.

Ferner sind Verlängerungsstutzen 56 vorhanden, die an einem Ende ein Innengewinde 57 aufweisen, das auf das Außengewinde 55 aufschraubbar ist. Zudem haben die Verlängerungsstutzen 56 am anderen Ende ein weiteres Außengewinde 58, auf das beispielsweise zwei Muttern 58 und ggfs. Dichtscheiben aufschraubbar sind.

Die Länge der Verlängerungsstutzen 56 ist so bemessen, dass diese mit dem einen Ende in die zweiten Löcher 18 der zweiten Lochplatte 19 einsetzbar und mit dem Innengewinde 57 am anderen Ende auf die Außengewinde 55 der Rohre 4 aufschraubbar sind. Mittels der Muttern 59 sind die Verlängerungsstutzen 56 an der zweiten Lochplatte 19 fixierbar.

Durch die Verschraubung oder ggfs. zusätzliche Abdichtmittel sind die Verlängerungsstutzen 56 an dem einen Ende mit dem Außengewinde 55 der Rohre 4 und am anderen Ende mit der zweiten Lochplatte 19 abdichtend verbindbar.

Durch die Verlängerungsstutzen 56 ist somit ein frei wählbarer Teil der Rohre 4 des Wärmetauschers 3 mit dem zweiten Verteilerraum 23 für die Verbrennungsluft verbindbar. Die nicht in der vorbeschriebenen Weise mit Verlängerungsstutzen 56 verschraubten Rohre münden in den ersten Verteilerraum 20 für Rohgas. Die nicht in der vorbeschriebenen Weise belegten zweiten Löcher 18 werden mittels Verlängerungsstutzen 55 geschlossen, indem diese von unten mit ihren weiteren Außengewinden 58 in die zweiten Löcher 18 eingesetzt und mittels der Muttern 59 in den zweiten Löchern 18 fixiert werden. Alternativ wurden die zweiten Löcher 18 mittels gesonderter Verschlussstopfen 60 geschlossen.

Durch diese Konstruktion kann die Anzahl der Rohre 4 des Wärmetauschers 3 für das Rohgas sowie für die Verbrennungsluft den jeweiligen Erfordernissen angepasst werden, insbesondere an den Gehalt des nachzuverbrennenden Rohgases an brennbaren Kohlenwasserstoffen und die Mengenströme sowie die Verhältnisse der Mengenströme von Rohgas und Verbrennungsluft.

Ferner ist es möglich, durch Entfernen von Verschlussstopfen 60 bzw. Verlängerungsstutzen 56 die unteren Öffnungen der Rohre 4 von unten zu erreichen, um von hier aus die Reinigungsarbeiten durchführen zu können, beispielsweise die Rohre zu inspizieren oder auszublasen.

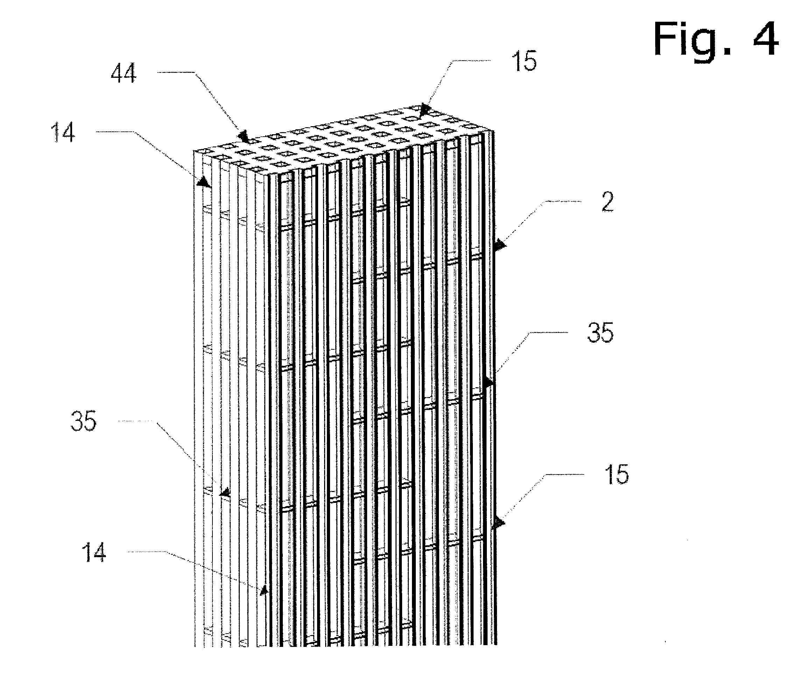

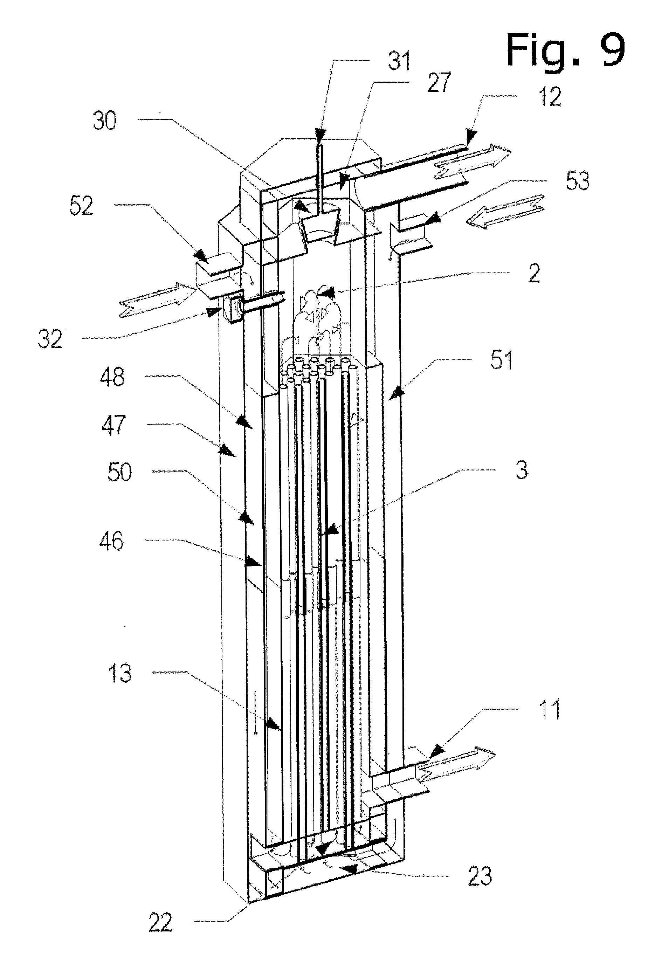

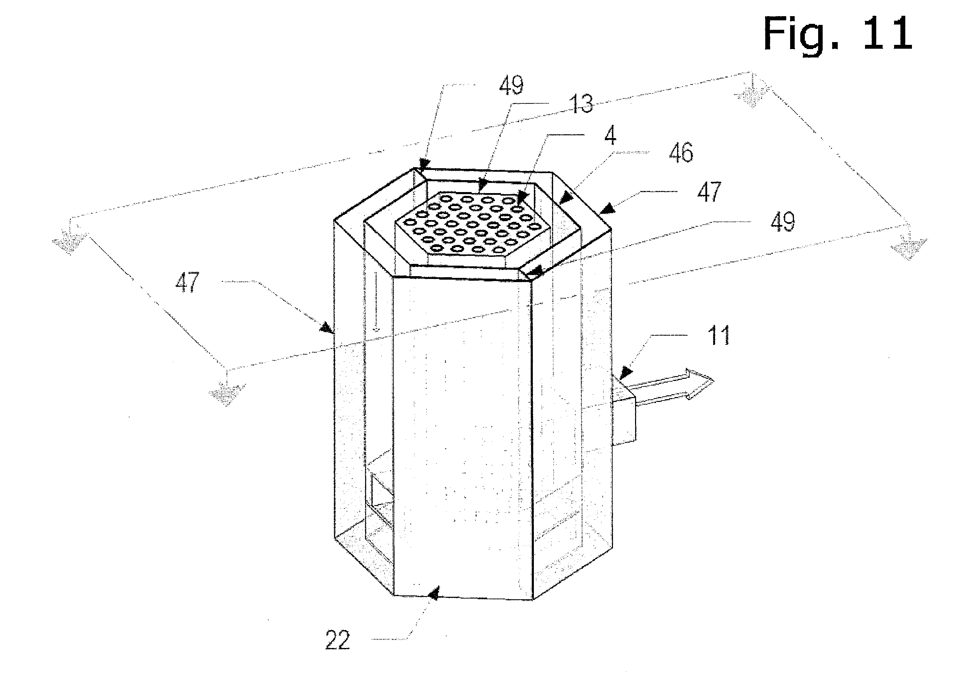

Die Vorrichtungen 1 gemäß den Fig. 1 bis 7 oder den Fig. 8 bis 11 können gemäß Fig. 12 bis 14 ausgestaltet sein.

## Patentansprüche

1. Verfahren zur thermischen Nachverbrennung von Abgasen aus unvollkommenen Verbrennungs- oder Ofenprozessen, Schwelgasen, Deponiegasen, Schmauchgasen aus keramischen Ofenprozessen, Gasen aus Hausmüll- oder Biokompostieranlagen, Schwachgasen oder anderen Kohlenwasserstoffe enthaltenden Reduktionsgasen mittels Luft oder anderen Oxidationsgasen, bei dem das Reduktionsgas und das Oxidationsgas der Nachverbrennung in einer Brennkammer separat zugeleitet und in der Brennkammer thermisch nachverbrannt werden und das Reduktionsgas bei der Zuleitung zur Brennkammer durch aus der Brennkammer weggeleitetes, thermisch nachverbranntes heißes Reingas rekuperativ erhitzt wird,
**dadurch gekennzeichnet, dass**
sowohl das Reduktionsgas als auch das Oxidationsgas auf dem Weg der separaten Zuleitung zur Brennkammer parallel strömend durch aus der Brennkammer weggeleitetes heißes Reingas rekuperativ erhitzt werden.

2. Verfahren nach Anspruch 1, bei dem das Reduktionsgas und das Oxidationsgas bis zu ihrer Einleitung in die Brennkammer durch das aus der Brennkammer weggeleitete Reingas rekuperativ erhitzt werden.

3. Verfahren nach Anspruch 1 oder 2, bei dem das Reduktionsgas und das Oxidationsgas durch den selben Mengenstrom des aus der Brennkammer weggeleiteten Reingases rekuperativ erhitzt werden.

4. Verfahren nach einem der Ansprüche 1 bis 3, bei dem das Reduktionsgas und das Oxidationsgas vertikal nach oben strömend durch das aus der Brennkammer weggeleitete Reingas rekuperativ erhitzt werden, wobei das Reduktionsgas und das Oxidationsgas bei ihrer separaten Zuleitung in die Brennkammer durch das aus der Brennkammer weggeleitete Reingas im Gegenstrom oder im Kreuzgegenstrom erhitzt werden.

5. Verfahren nach Anspruch 1 oder 2, bei dem zum Starten der Nachverbrennung die Brennkammer durch eine elektrische Widerstandsheizung oder eine andere Heizeinrichtung und/oder durch einen Gasbrenner oder eine andere Feuerungseinrichtung zumindest auf eine Temperatur oberhalb der Zündtemperatur der Eduktgasmischung vorgeheizt wird.

6. Verfahren nach einem der Ansprüche 1 bis 5, bei dem gesondert von einem für die rekuperative Erhitzung der Eduktgase aus der Brennkammer weggeleiteten ersten Teilstrom des heißen Reingases ein zweiter Teilstrom des heißen Reingases aus der Brennkammer weggeleitet wird, um den Druck und die Temperatur in der Brennkammer einzustellen, und/oder der zweite Teilstrom des heißen Reingases einem nachgeschalteten Energiewandler zum Umwandeln von Wärmeenergie in mechanische oder in elektrische Energie zugeführt wird.

7. Verfahren nach einem der Ansprüche 1 bis 5, bei dem das Reingas aus der Brennkammer durch eine offen poröse keramische Schicht weggeleitet wird, welche einerseits die Wärmestrahlung von der Brennkammer in den Leitungsweg des Reingases verringert, andererseits die Verbrennung in der Brennkammer verbessert, indem in ihrer Porenstruktur eine starke Verwirbelung bei gleichzeitig hoher Temperatur die Oxidation des Reduktionsgases final abschließt, bevor das thermisch nachverbrannte Reingas der rekuperativen Erhitzung der Eduktgase zugeleitet wird.

8. Vorrichtung zur thermischen Nachverbrennung von Abgasen aus unvollkommenen Verbrennungs- oder Ofenprozessen, Schwelgasen, Deponiegasen, Schmauchgasen aus keramischen Ofenprozessen, Gasen aus Hausmüll- oder Biokompostieranlagen, Schwachgasen oder anderen Kohlenwasserstoffe enthaltenden Reduktionsgasen mittels Luft oder anderen Oxidationsgasen mit einer Brennkammer (2), die separate Einlässe (5, 6) für Reduktionsgas und Oxidationsgas und einen Auslass (9) für thermisch nachverbranntes heißes Reingas aufweist, und mindestens einen rekuperativen Wärmetauscher (3) mit mindestens einem primärseitigen Strömungskanal (24), dessen Einlass (10) mit dem Auslass (9) für heißes Reingas der Brennkammer (2) verbunden ist, und mindestens einem sekundärseitigen Strömungskanal (14), der einen Einlass (5) für das Reduktionsgas und einen Auslass (7) hat, der mit dem Einlass der Brennkammer (2) für Reduktionsgas verbunden ist,
**dadurch gekennzeichnet, dass**
der rekuperative Wärmetauscher (2) mindestens einen sekundärseitigen Strömungskanal (15) für das Oxidationsgas aufweist, der einen Einlass (6) für das Oxidationsgas und einen Auslass (8) aufweist, der mit dem Einlass für das Oxidationsgas der Brennkammer (2) verbunden ist.

9. Vorrichtung nach Anspruch 8, bei der für einen Betrieb des Wärmetauschers (3) im Gegenstrom ein Einlass (24) mindestens eines primärseitigen Strömungskanals (24), der den Auslässen (7, 8) der sekundären Strömungskanäle (14, 15) benachbart ist, mit dem Auslass der Brennkammer (2) für heißes Reingas verbunden ist und die Auslässe (7, 8) der sekundärseitigen Strömungskanäle (14, 15) direkt mit den Einlässen für Eduktgase des Brennraumes (2) verbunden sind und der Einlass (10) des primärseitigen Strömungskanals (24) direkt mit dem Auslass (9) der Brennkammer (2) für heißes Reingas verbunden ist.

10. Vorrichtung nach Anspruch 8 oder 9, bei der der Wärmetauscher (3) in einem Gehäuse (13) parallele gerade Rohre (4) aufweist, von denen eine erste Gruppe (14) mit ihren Öffnungen an einem ersten Ende in einem ersten Verteilerraum (20) für das Reduktionsgas mündet, der den Einlass (5) für das Reduktionsgas aufweist, und mit ihren Öffnungen an einem zweiten Ende in der Brennkammer (2) mündet, von denen eine zweite Gruppe (15) mit ihren Öffnungen an einem ersten Ende in einem zweiten Verteilerraum (23) für das Oxidationsgas mündet, der einen Einlass (6) für Oxidationsgas aufweist, und mit ihren Öffnungen an einem zweiten Ende in der Brennkammer (2) mündet, und bei dem der Mantelraum (24) zwischen den parallelen Rohren (4) und dem Gehäuse (13) an einem ersten Ende über eine Öffnung mit der Brennkammer (2) verbunden ist und an einem zweiten Ende einen Auslass (11) für abgekühltes Reingas aufweist, die Brennkammer (2) und der Wärmetauscher (3) zu einer baulichen Einheit zusammengefasst sind.

11. Vorrichtung nach einem der Ansprüche 8 bis 10, bei der die Brennkammer (2) einen zweiten Auslass (12) für heißes Reingas und ein mit dem zweiten Auslass (12) verbundenes Ventil (29, 30) zum Einstellen des aus dem zweiten Auslass (12) abströmenden Mengenstromes aufweist.

12. Vorrichtung nach einem der Ansprüche 10 bis 11, bei der die Rohre (4) des Wärmetauschers (3) Abschnitte (37) haben, die aus Edelstahlrohren gefertigt sind und in Löcher von Lochplatten (17, 19) gasdicht eingeschweißt sind, welche die Verteilerräume (20, 23) für das Reduktionsgas und das Oxidationsgas begrenzen, wobei der die den ersten Verteilerraum (20) begrenzende erste Lochplatte (17), auf die das Reingas vor dem Austritt aus dem Auslass für Reingas zuströmt, mit einer keramischen Isolation versehen ist, sodass die erste Lochplatte (17) sowie die Einschweißstellen vor thermischer Belastung und chemisch korrosivem Angriff geschützt ist.

13. Vorrichtung nach einem der Ansprüche 8 bis 12, bei der die Rohre (4) in der Brennkammer (2) mündende zweite Abschnitte (38) aufweisen, die aus gasdichtem Silizium infiltriertem Siliziumcarbid (SiC) gefertigt sind, die vorzugsweise Temperaturen bis 1360°C widerstehen und sich frei in ihrer Länge ausdehnen können, da diese Abschnitte (38) der Rohre (4) nur jeweils an einer Position in ihrer Längsrichtung fixiert sind und sich im Übrigen in ihrer Längsrichtung frei ausdehnen können.

14. Vorrichtung nach Anspruch 12 und 13, bei der die ersten Abschnitte (37) der Rohre (4) aus Edelstahl und die zweiten Abschnitte (38) der Rohre (4) aus SiC koaxial aufeinander ausgerichtet und an einem Ende fest miteinander verbunden sind, wobei die Fügestelle (40) zwischen den ersten Abschnitten (37) der Rohre (4) aus Edelstahl und den zweiten Abschnitten (38) der Rohre (4) aus SiC einen von den ersten Abschnitten (37) mit Abstand von einem Ende nach außen vorstehenden Kragen (41) und ein an den Kragen (41) angeschweißten Rohrstück (42) aus Edelstahl mit einem Ringspalt (43) zwischen dem Rohrstück (42) und dem ersten Abschnitt (37) umfasst, wobei die zweiten Abschnitte (38) mit ihren Endbereichen in die Ringspalte (43) eingesetzt sind und auf dem Kragen (41) aufsitzen.

15. Vorrichtung nach einem der Ansprüche 8 bis 14, bei der eine offen poröse keramische Schicht (44) einen unteren Teil der Brennkammer (2), in den die Rohre (4) mit den Öffnungen an ihren ersten Enden münden, abschließt, um einerseits die unmittelbare Wärmestrahlung vom Brennraum (33) in den Bereich um die Rohre (4) zu minimieren, andererseits die im Brennraum (33) stattfindende Verbrennung zu verbessern, indem in der Porenstruktur der keramischen Schicht starke Verwirbelungen bei gleichzeitig hoher Temperatur die Oxidation des Reduktionsgases final abschließt, bevor das Reingas um die Rohre (4) im Gegenstrom und ggfs. mittels Schikanen (35) im Kreuzgegenstrom zu den Eduktgasen weggeleitet wird.
